# EUROPEAN PATENT APPLICATION

(11) **EP 4 678 884 A1**
(43) Date of publication of application: **14.01.2026**
(21) Application number: 25187116.6
(22) Date of filing: 03.07.2025
(51) Int. Cl.: F01P 11/02

(54) **COOLANT DEAERATION SYSTEM FOR DEAERATING COOLANT OF VEHICLE**

(30) Priority: 12.07.2024 US 202418770782
(71) Applicant: Volvo Truck Corporation, 405 08 Göteborg (SE)
(72) Inventor: PAUL, Chayan, 560037 Bengaluru (IN); N KULKARNI, Nikhil, 411017 Pune (IN); SIVALINGAM, Manoj Kumar, 560076 Bangalore (IN)
(74) Representative: Zacco Sweden AB

(57) **Abstract**

A coolant deaeration system for deaerating a coolant of a vehicle is provided. The coolant deaeration system includes an inlet fluid accelerator, a centrifugal gas-coolant separator, and an expansion tank. The inlet fluid accelerator increases a flow velocity of the coolant. The centrifugal gas-coolant separator includes an upper coolant inlet coupled with the inlet fluid accelerator, a separator chamber in fluid communication with the upper coolant inlet and configured to deaerate gas from the coolant in a swirling motion produced by the increased flow velocity of the coolant entering the separator chamber, and a top gas outlet in gaseous communication with the separator chamber and configured to exhaust the gas out of the separator chamber. The expansion tank includes an upper gas inlet coupled with the top gas outlet, and a tank chamber in gaseous communication with the upper gas inlet and configured to accommodate the gas entering the tank chamber.

## Description

### TECHNICAL FIELD

The disclosure relates generally to a deaeration arrangement. In particular aspects, the disclosure relates to a coolant deaeration system for deaerating a coolant of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Air can enter and be trapped in a coolant circuit of a vehicle in the form of dissolved gas, bubbles, or air pockets. The presence of gas in a vehicle coolant can cause problems within the vehicle, such as pipe blockages, loss of cooling/heating performance, pumping loss, reduced heat capacity of the coolant, component damage due to cavitation and corrosion, spilled coolant, and other problems. All these problems may increase frequencies of refilling and manual bleeding of the coolant in a vehicle.

### SUMMARY

According to an aspect of the disclosure, a coolant deaeration system for deaerating a coolant of a vehicle is provided. The coolant deaeration system may comprise an inlet fluid accelerator, a centrifugal gas-coolant separator, and an expansion tank. The inlet fluid accelerator may be configured to receive the coolant and increase a flow velocity of the coolant. The centrifugal gas-coolant separator may comprise an upper coolant inlet coupled with the inlet fluid accelerator and configured to receive the coolant via the inlet fluid accelerator, a separator chamber in fluid communication with the upper coolant inlet and configured to deaerate gas from the coolant in a swirling motion produced by the increased flow velocity of the coolant entering the separator chamber through the upper coolant inlet, and a top gas outlet in gaseous communication with the separator chamber and configured to exhaust the gas deaerated from the coolant in the swirling motion out of the separator chamber. The expansion tank may comprise an upper gas inlet coupled with the top gas outlet and configured to receive the gas through the top gas outlet, and a tank chamber in gaseous communication with the upper gas inlet and configured to accommodate the gas entering the tank chamber through the upper gas inlet. The aspect of the disclosure may seek to facilitate removing gas from the coolant in coolant circuits as the gas in the coolant may be detrimental to overall cooling/heating effectiveness and system robustness of the vehicle. A technical benefit may include facilitating deaeration of the coolant by the expansion tank and the centrifugal gas-coolant separator so as to improve a deaeration efficiency and/or an overall deaeration of the coolant deaeration system.

Optionally in some examples, including in at least one preferred example, in the coolant deaeration system, the inlet fluid accelerator may be further configured to be coupled with a cooling/heating system of the vehicle and receive the coolant from the cooling/heating system. A technical benefit may include providing an amount of coolant to the centrifugal gas-coolant separator so as to improve a deaeration efficiency and/or an overall deaeration of the coolant deaeration system.

Optionally in some examples, including in at least one preferred example, the coolant deaeration system may further comprise a deaerating valve coupled with the inlet fluid accelerator and configured to be coupled with a cooling/heating system of the vehicle and actively bleed the gas out when receiving the coolant from the cooling/heating system, the inlet fluid accelerator may be further configured to receive the coolant via the deaerating valve. A technical benefit may include preventing an amount of gas from entering the centrifugal gas-coolant separator and/or the expansion tank so as to improve a deaeration efficiency and/or an overall deaeration of the coolant deaeration system.

Optionally in some examples, including in at least one preferred example, the coolant deaeration system may further comprise an intake valve configured to be coupled with a cooling/heating system of the vehicle and receive the coolant from the cooling/heating system, the expansion tank may further comprise an upper coolant intake port coupled with the intake valve and configured to receive the coolant via the intake valve, and the tank chamber may be in fluid communication with the upper coolant intake port and further configured to accommodate the coolant entering the tank chamber through the upper coolant intake port. A technical benefit may include preventing gas and/or coolant from being pulled out of the expansion tank by the inlet fluid accelerator so as to improve a deaeration efficiency and/or an overall deaeration of the coolant deaeration system.

Optionally in some examples, including in at least one preferred example, the coolant deaeration system may further comprise a deaerating valve coupled with the intake valve and configured to be coupled with the cooling/heating system and actively bleed the gas out when receiving the coolant from the cooling/heating system, the intake valve may be further configured to be coupled with the cooling/heating system via the deaerating valve and receive the coolant via the deaerating valve. A technical benefit may include preventing an amount of gas from entering the centrifugal gas-coolant separator and/or the expansion tank so as to improve a deaeration efficiency and/or an overall deaeration of the coolant deaeration system.

Optionally in some examples, including in at least one preferred example, the coolant deaeration system may further comprise a distribution and equalizer valve coupled with the intake valve and configured to be selectively coupled with a cold coolant line and a hot coolant line of the cooling/heating system of the vehicle and operatively couple the cold coolant line with the hot coolant line, the intake valve may be further configured to be coupled with and receive the coolant from the cold coolant line and the hot coolant line via the distribution and equalizer valve. A technical benefit may include preventing an amount of coolant from being mixed in low and high temperature coolant circuits so as to improve a deaeration efficiency and/or an overall deaeration of the coolant deaeration system.

Optionally in some examples, including in at least one preferred example, in the coolant deaeration system, the tank chamber may be further configured to accommodate the coolant, and the expansion tank may further comprise a lower coolant drain port in fluid communication with the tank chamber and configured to drain the coolant out of the tank chamber. A technical benefit may include performing deaeration of the coolant in the expansion tank so as to improve a deaeration efficiency and/or an overall deaeration of the coolant deaeration system.

Optionally in some examples, including in at least one preferred example, in the coolant deaeration system of, the lower coolant drain port may be further configured to be coupled with a cooling/heating system of the vehicle and drain the coolant into the cooling/heating system. A technical benefit may include sustaining sufficient coolant in coolant circuits in the vehicle so as to improve a deaeration efficiency and/or an overall deaeration of the coolant deaeration system.

Optionally in some examples, including in at least one preferred example, the coolant deaeration system may further comprise a lower drain valve coupled with the lower coolant drain port and configured to be coupled with the cooling/heating system and drain the coolant into the cooling/heating system, the lower coolant drain port may be further configured to be coupled with and drain the coolant into the cooling/heating system via the lower drain valve. A technical benefit may include contributing to inactivating an entire deaeration circuit so as to improve a deaeration efficiency and/or an overall deaeration of the coolant deaeration system.

Optionally in some examples, including in at least one preferred example, the coolant deaeration system may further comprise a flow control valve coupled with the lower coolant drain port and configured to be coupled with the cooling/heating system and drain the coolant into the cooling/heating system, the lower coolant drain port may be further configured to be coupled with and drain the coolant into the cooling/heating system via the flow control valve. A technical benefit may include increasing a flow rate of the coolant so as to improve a deaeration efficiency and/or an overall deaeration of the coolant deaeration system.

Optionally in some examples, including in at least one preferred example, the coolant deaeration system may further comprise an outlet pump coupled with the lower coolant drain port and configured to be coupled with the cooling/heating system and drain the coolant into the cooling/heating system, the lower coolant drain port may be further configured to be coupled with and drain the coolant into the cooling/heating system via the outlet pump. A technical benefit may include increasing a flow rate of the coolant in an entire deaeration circuit so as to improve a deaeration efficiency and/or an overall deaeration of the coolant deaeration system.

Optionally in some examples, including in at least one preferred example, the coolant deaeration system may further comprise a bypass valve coupled with the lower coolant drain port and configured to be coupled with the cooling/heating system and drain the coolant into the cooling/heating system, the lower coolant drain port may be further configured to be coupled with and drain the coolant into the cooling/heating system via the bypass valve. A technical benefit may include contributing to resuming a normal operation of the coolant deaeration system so as to improve a deaeration efficiency and/or an overall deaeration of the coolant deaeration system.

Optionally in some examples, including in at least one preferred example, the coolant deaeration system may further comprise a distribution and equalizer valve coupled with the lower coolant drain port and configured to be selectively coupled with a cold coolant line and a hot coolant line of the cooling/heating system and operatively couple the cold coolant line with the hot coolant line, the lower coolant drain port may be further configured to be coupled with and drain the coolant into the cold coolant line and the hot coolant line via the distribution and equalizer valve. A technical benefit may include preventing an amount of coolant from being mixed in low and high temperature coolant circuits so as to improve a deaeration efficiency and/or an overall deaeration of the coolant deaeration system.

Optionally in some examples, including in at least one preferred example, the coolant deaeration system may further comprise a distribution and equalizer valve coupled with the inlet fluid accelerator and configured to be selectively coupled with a cold coolant line and a hot coolant line of a cooling/heating system of the vehicle and operatively couple the cold coolant line with the hot coolant line, the inlet fluid accelerator may be further configured to receive the coolant from the cold coolant line and the hot coolant line via the distribution and equalizer valve. A technical benefit may include preventing an amount of coolant from being mixed in low and high temperature coolant circuits so as to improve a deaeration efficiency and/or an overall deaeration of the coolant deaeration system.

Optionally in some examples, including in at least one preferred example, in the coolant deaeration system, the centrifugal gas-coolant separator may further comprise a lower coolant outlet in fluid communication with the separator chamber and configured to drain the coolant out of the separator chamber. A technical benefit may include sustaining sufficient coolant in coolant circuits in the vehicle so as to improve a deaeration efficiency and/or an overall deaeration of the coolant deaeration system.

Optionally in some examples, including in at least one preferred example, in the coolant deaeration system, the expansion tank may further comprise an upper coolant entrance coupled with the lower coolant outlet and configured to receive the coolant through the lower coolant outlet, and the tank chamber may be in fluid communication with the upper coolant entrance and further configured to accommodate the coolant entering the tank chamber through the upper coolant entrance. A technical benefit may include providing an amount of coolant to the expansion tank so as to improve a deaeration efficiency and/or an overall deaeration of the coolant deaeration system.

Optionally in some examples, including in at least one preferred example, in the coolant deaeration system, the lower coolant outlet may be further configured to couple with a cooling/heating system of the vehicle and drain the coolant into the cooling/heating system. A technical benefit may include sustaining sufficient coolant in coolant circuits in the vehicle so as to improve a deaeration efficiency and/or an overall deaeration of the coolant deaeration system.

Optionally in some examples, including in at least one preferred example, the coolant deaeration system may further comprise a lower drain valve coupled with the lower coolant outlet and configured to be coupled with the cooling/heating system and drain the coolant into the cooling/heating system, the lower coolant outlet may be further configured to be coupled with and drain the coolant into the cooling/heating system via the lower drain valve. A technical benefit may include contributing to inactivating an entire deaeration circuit so as to improve a deaeration efficiency and/or an overall deaeration of the coolant deaeration system.

Optionally in some examples, including in at least one preferred example, the coolant deaeration system may further comprise a flow control valve coupled with the lower coolant outlet and configured to be coupled with the cooling/heating system and drain the coolant into the cooling/heating system, the lower coolant outlet may be further configured to be coupled with and drain the coolant into the cooling/heating system via the flow control valve. A technical benefit may include increasing a flow rate of the coolant so as to improve a deaeration efficiency and/or an overall deaeration of the coolant deaeration system.

Optionally in some examples, including in at least one preferred example, the coolant deaeration system may further comprise an outlet pump coupled with the lower coolant outlet and configured to be coupled with the cooling/heating system and drain the coolant into the cooling/heating system, the lower coolant outlet may be further configured to be coupled with and drain the coolant into the cooling/heating system via the outlet pump. A technical benefit may include increasing a flow rate of the coolant in an entire deaeration circuit so as to improve a deaeration efficiency and/or an overall deaeration of the coolant deaeration system.

Optionally in some examples, including in at least one preferred example, the coolant deaeration system may further comprise a bypass valve coupled with the lower coolant outlet and configured to be coupled with the cooling/heating system and drain the coolant into the cooling/heating system, the lower coolant outlet may be further configured to be coupled with and drain the coolant into the cooling/heating system via the bypass valve. A technical benefit may include contributing to resuming a normal operation of the coolant deaeration system so as to improve a deaeration efficiency and/or an overall deaeration of the coolant deaeration system.

Optionally in some examples, including in at least one preferred example, the coolant deaeration system may further comprise a distribution and equalizer valve coupled with the lower coolant outlet and configured to be selectively coupled with a cold coolant line and a hot coolant line of the cooling/heating system and operatively couple the cold coolant line with the hot coolant line, the lower coolant outlet may be further configured to be coupled with and drain the coolant into the cold coolant line and the hot coolant line via the distribution and equalizer valve. A technical benefit may include preventing an amount of coolant from being mixed in low and high temperature coolant circuits so as to improve a deaeration efficiency and/or an overall deaeration of the coolant deaeration system.

Optionally in some examples, including in at least one preferred example, in the coolant deaeration system, the expansion tank may further comprise an upper coolant intake port configured to be coupled with a cooling/heating system of the vehicle and receive the coolant from the cooling/heating system, and the tank chamber may be in fluid communication with the upper coolant intake port and further configured to accommodate the coolant entering the tank chamber through the upper coolant intake port. A technical benefit may include providing an amount of coolant to the expansion tank so as to improve a deaeration efficiency and/or an overall deaeration of the coolant deaeration system.

Optionally in some examples, including in at least one preferred example, the coolant deaeration system may further comprise a distribution and equalizer valve coupled with the upper coolant intake port and configured to be selectively coupled with a cold coolant line and a hot coolant line of a cooling/heating system of the vehicle and operatively couple the cold coolant line with the hot coolant line, the upper coolant intake port may be further configured to be coupled with and receive the coolant from the cold coolant line and the hot coolant line via the distribution and equalizer valve. A technical benefit may include preventing an amount of coolant from being mixed in low and high temperature coolant circuits so as to improve a deaeration efficiency and/or an overall deaeration of the coolant deaeration system.

Optionally in some examples, including in at least one preferred example, the coolant deaeration system may further comprise a deaerating valve coupled with the upper coolant intake port and configured to be coupled with the cooling/heating system and actively bleed the gas out when receiving the coolant from the cooling/heating system, the upper coolant intake port may be further configured to be coupled with and receive the coolant via the deaerating valve. A technical benefit may include preventing an amount of gas from entering the centrifugal gas-coolant separator and/or the expansion tank so as to improve a deaeration efficiency and/or an overall deaeration of the coolant deaeration system.

Optionally in some examples, including in at least one preferred example, in the coolant deaeration system, the expansion tank may further comprise a lower coolant drain port in fluid communication with the tank chamber and configured to drain the coolant out of the tank chamber, the inlet fluid accelerator may be coupled with the lower coolant drain port and further configured to receive the coolant through the lower coolant drain port. A technical benefit may include providing an amount of coolant to the centrifugal gas-coolant separator so as to improve a deaeration efficiency and/or an overall deaeration of the coolant deaeration system.

Optionally in some examples, including in at least one preferred example, the coolant deaeration system may further comprise an input valve coupled with and configured to receive the coolant through the lower coolant drain port, the upper coolant inlet may be coupled with the input valve and configured to receive the coolant via the input valve. A technical benefit may include providing a sufficient amount of coolant to the centrifugal gas-coolant separator so as to improve a deaeration efficiency and/or an overall deaeration of the coolant deaeration system.

Optionally in some examples, including in at least one preferred example, the coolant deaeration system may further comprise an output valve coupled with and configured to receive the coolant through the lower coolant drain port and further configured to be coupled with the cooling/heating system, the lower coolant drain port may be configured to drain the coolant into the cooling/heating system via the output valve. A technical benefit may include preventing the coolant from being pulled out of the cooling/heating system by the inlet fluid accelerator so as to improve a deaeration efficiency and/or an overall deaeration of the coolant deaeration system.

Optionally in some examples, including in at least one preferred example, the coolant deaeration system may further comprise a nozzle coupled with the upper coolant inlet and configured to further increase the flow velocity of the coolant and inject the coolant with the further increased flow velocity into the separator chamber. A technical benefit may include enhancing the swirling motion so as to improve a deaeration efficiency and/or an overall deaeration of the coolant deaeration system.

Optionally in some examples, including in at least one preferred example, in the coolant deaeration system, the centrifugal gas-coolant separator may further comprise a separator casing delineating the separator chamber, wherein the separator casing may comprise a top separator surface, and the top gas outlet may be formed on the top separator surface. A technical benefit may include facilitating gas exhaustion while preventing the coolant from flowing through the top gas outlet so as to improve a deaeration efficiency and/or an overall deaeration of the coolant deaeration system.

Optionally in some examples, including in at least one preferred example, in the coolant deaeration system, the expansion tank may further comprise a tank casing delineating the tank chamber, the tank casing may comprise a top tank surface, and the upper gas inlet may be formed on the top tank surface. A technical benefit may include preventing the coolant from flowing through the upper gas inlet so as to improve a deaeration efficiency and/or an overall deaeration of the coolant deaeration system.

Optionally in some examples, including in at least one preferred example, in the coolant deaeration system, the expansion tank may further comprise an upper gas exhaust port in gaseous communication with the tank chamber and configured to exhaust the gas out of the tank chamber. A technical benefit may include facilitating gas exhaustion while preventing the coolant from flowing through the upper gas exhaust port so as to improve a deaeration efficiency and/or an overall deaeration of the coolant deaeration system.

Optionally in some examples, including in at least one preferred example, in the coolant deaeration system, the expansion tank may further comprise a tank casing delineating the tank chamber, the tank casing may comprise a top tank surface, and the upper gas exhaust port may be formed on the top tank surface. A technical benefit may include facilitating gas exhaustion while preventing the coolant from flowing through the upper gas exhaust port so as to improve a deaeration efficiency and/or an overall deaeration of the coolant deaeration system.

Optionally in some examples, including in at least one preferred example, in the coolant deaeration system, the centrifugal gas-coolant separator may be integrated with the expansion tank. A technical benefit may include reducing assembly cost, time, and/or complexity so as to improve a value and/or competitivity of the coolant deaeration system.

Optionally in some examples, including in at least one preferred example, in the coolant deaeration system, the centrifugal gas-coolant separator 100 may be separated from the expansion tank. A technical benefit may include reducing maintenance cost, time, and/or complexity so as to improve a value and/or competitivity of the coolant deaeration system.

Optionally in some examples, including in at least one preferred example, in the coolant deaeration system, the centrifugal gas-coolant separator may have a funnel shape. A technical benefit may include contributing the swirl motion so as to improve a deaeration efficiency and/or an overall deaeration of the coolant deaeration system.

Optionally in some examples, including in at least one preferred example, the coolant deaeration system may further comprise at least one pump, at least one valve, and an electric control unit (ECU). The at least one pump may be coupled with the centrifugal gas-coolant separator and/or the expansion tank. The at least one valve may be coupled with the centrifugal gas-coolant separator and/or the expansion tank. The electric control unit (ECU) may be electrically coupled with the at least one pump and the at least one valve and configured to control operations of the centrifugal gas-coolant separator and the expansion tank via the at least one pump and the at least one valve. A technical benefit may include facilitating controlling and/or operations of components of the coolant deaeration system so as to improve a deaeration efficiency and/or an overall deaeration of the coolant deaeration system.

Optionally in some examples, including in at least one preferred example, the coolant deaeration system may further comprise at least one gas sensor coupled with the centrifugal gas-coolant separator and/or the expansion tank and configured to detect the gas in the coolant. A technical benefit may include facilitating controlling and/or operations of components of the coolant deaeration system so as to improve a deaeration efficiency and/or an overall deaeration of the coolant deaeration system.

Optionally in some examples, including in at least one preferred example, the coolant deaeration system may further comprise at least one temperature sensor coupled with the centrifugal gas-coolant separator and/or the expansion tank and configured to detect a temperature of the coolant. A technical benefit may include facilitating controlling and/or operations of components of the coolant deaeration system so as to improve a deaeration efficiency and/or an overall deaeration of the coolant deaeration system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic diagram illustrating components of a coolant deaeration system cooperating with a cooling/heating system of a vehicle according to some examples.
**FIG. 2** is an exemplary schematic diagram illustrating some components of a coolant deaeration system for generating a swirling motion according to some examples.
**FIG. 3** is an exemplary schematic diagram illustrating a centrifugal gas-coolant separator integrated with an expansion tank according to some examples.
**FIG. 4** is an exemplary schematic diagram illustrating a centrifugal gas-coolant separator separated from an expansion tank according to some examples.
**FIG. 5** is an exemplary schematic diagram illustrating a centrifugal gas-coolant separator having a funnel shape according to some examples.
**FIG. 6** is an exemplary schematic diagram illustrating components of a coolant deaeration system cooperating with a cooling/heating system of a vehicle according to some examples.
**FIG. 7** is an exemplary schematic diagram illustrating components of a coolant deaeration system cooperating with a cooling/heating system of a vehicle according to some examples.
**FIG. 8** is an exemplary schematic diagram illustrating components of a coolant deaeration system cooperating with a cooling/heating system of a vehicle according to some examples.
**FIG. 9** is an exemplary schematic diagram illustrating components of a coolant deaeration system cooperating with a cooling/heating system of a vehicle according to some examples.
**FIG. 10** is an exemplary schematic diagram illustrating components of a coolant deaeration system cooperating with a cooling/heating system of a vehicle according to some examples.
**FIG. 11** is an exemplary schematic diagram illustrating components of a coolant deaeration system cooperating with a cooling/heating system of a vehicle according to some examples.
**FIG. 12** is an exemplary schematic diagram illustrating components of a coolant deaeration system cooperating with a cooling/heating system of a vehicle according to some examples.
**FIG. 13** is an exemplary schematic diagram illustrating a distribution and equalizer valve of a coolant deaeration system according to some examples.
**FIG. 14** is an exemplary schematic diagram illustrating a distribution and equalizer valve of a coolant deaeration system according to some examples.
**FIG. 15** is an exemplary schematic diagram illustrating a distribution and equalizer valve of a coolant deaeration system according to some examples.
**FIG. 16** is an exemplary schematic diagram illustrating a distribution and equalizer valve of a coolant deaeration system according to some examples.
**FIG. 17** is an exemplary schematic diagram illustrating components of a coolant deaeration system cooperating with a cooling/heating system of a vehicle according to some examples.
**FIG. 18** is an exemplary schematic diagram illustrating components of a coolant deaeration system cooperating with a cooling/heating system of a vehicle according to some examples.
**FIG. 19** is an exemplary schematic diagram illustrating components of a coolant deaeration system cooperating with a cooling/heating system of a vehicle according to some examples.
**FIG. 20** is an exemplary schematic diagram illustrating components of a coolant deaeration system cooperating with a cooling/heating system of a vehicle according to some examples.
**FIG. 21** is an exemplary schematic diagram illustrating components of a coolant deaeration system cooperating with a cooling/heating system of a vehicle according to some examples.
**FIG. 22** is an exemplary schematic diagram illustrating components of a coolant deaeration system cooperating with a cooling/heating system of a vehicle according to some examples.
**FIG. 23** is an exemplary schematic diagram illustrating components of a coolant deaeration system cooperating with a cooling/heating system of a vehicle according to some examples.
**FIG. 24** is an exemplary schematic diagram illustrating components of a coolant deaeration system cooperating with a cooling/heating system of a vehicle according to some examples.
**FIG. 25** is an exemplary schematic diagram illustrating components of a coolant deaeration system cooperating with a cooling/heating system of a vehicle according to some examples.
**FIG. 26** is an exemplary schematic diagram illustrating components of a coolant deaeration system cooperating with a cooling/heating system of a vehicle according to some examples.
**FIG. 27** is an exemplary schematic diagram illustrating components of a coolant deaeration system cooperating with a cooling/heating system of a vehicle according to some examples.
**FIG. 28** is an exemplary schematic diagram illustrating components of a coolant deaeration system electrically coupled with one another according to some examples.

### DETAILED DESCRIPTION

The detailed description set forth below provides information and examples of the disclosed technology with sufficient detail to enable those skilled in the art to practice the disclosure.

The disclosure aims to provide a solution for effectively and reliably solve problems of damages to vehicle components, coolant lost, insects attraction, and increased frequencies of vehicle maintenance due to gas trapped in vehicle coolant circuits.

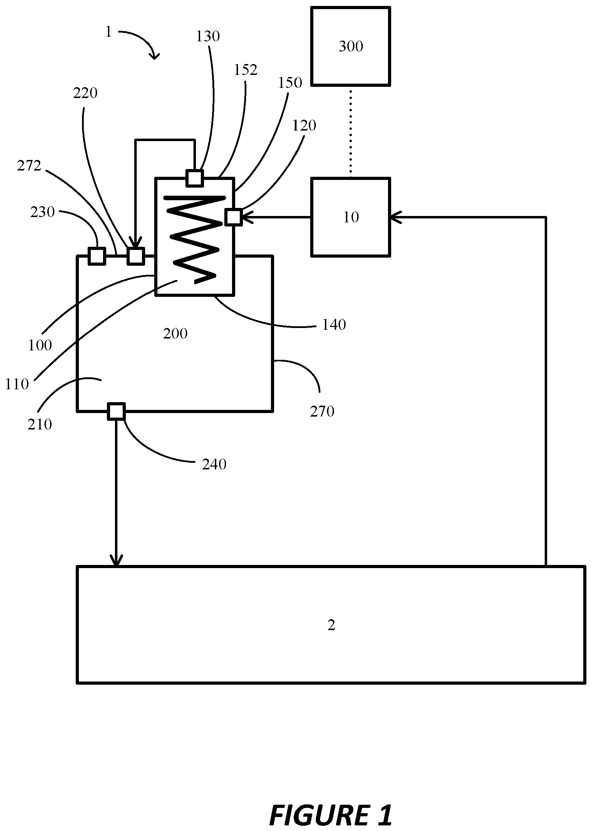

**FIG. 1** is an exemplary schematic diagram illustrating components of a coolant deaeration system 1 cooperating with a cooling/heating system 2 of a vehicle according to some examples.

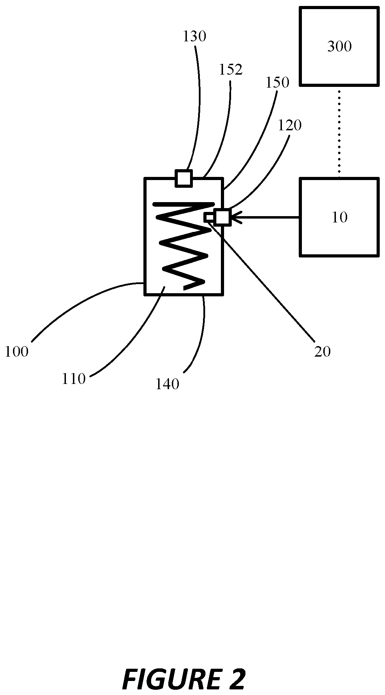

**FIG. 2** is an exemplary schematic diagram illustrating some components of a coolant deaeration system 1 for generating a swirling motion according to some examples.

As shown in **FIG. 1****,** in some aspects, a coolant deaeration system 1 for deaerating a coolant of a vehicle, such as conventional and electrical vehicles, may be provided. The coolant deaeration system 1 may be related to coolant deaeration arrangement in the vehicle. The coolant deaeration system 1, may effectively and rapidly deaerate a coolant, or remove gas, or trapped gas that may be in the form of dissolved gas, or small to large gas bubbles or gas pockets, from the coolant on demand. This may improve the overall cooling/heating effectiveness and system robustness of the vehicle, and reduce or prevent unpredictable failures in a thermal system, such as a radiator, a heater, a cabin, a battery, a motor, a transmission, power electronics, a chiller, or an AC circuit, in the vehicle.

The coolant deaeration system 1 may include an inlet fluid accelerator 10, a centrifugal gas-coolant separator 100, and an expansion tank 200. During an operation period of the vehicle, the coolant may be circulated in the cooling/heating system 2 of the vehicle as well as in the coolant deaeration system 1, and deaeration may occur in the coolant separator 100 and/or the expansion tank 200. Additionally, when the vehicle is not operating, deaeration may still occur in the coolant separator 100 and/or the expansion tank 200, if there is coolant accumulated within the coolant separator 100 and/or the expansion tank 200. Additionally, the expansion tank 200 may have an expansion function and/or a degassing function.

The inlet fluid accelerator 10, which may, for example, be an inlet pump or an inlet nozzle, may be configured to receive the coolant and increase a flow velocity of the coolant. The effectiveness of deaeration of the coolant may be enhanced by the increased flow velocity of the coolant. When the inlet fluid accelerator 10 is an inlet nozzle, a separate pump may be provided to pump coolant from the cooling/heating system 2 into the coolant deaeration system 1.

The centrifugal gas-coolant separator 100 may include an upper coolant inlet 120, a separator chamber 110, and a top gas outlet 130. The upper coolant inlet 120 may be coupled with the inlet fluid accelerator 10 and may be configured to receive the coolant via the inlet fluid accelerator 10. The flow velocity of the coolant may be increased after the coolant passes through the inlet fluid accelerator 10.

The separator chamber 110 may have a curved inner surface that has a generally circular cross-section and that is generally cylindrical, spherical, funnel, conical or bowl shaped. The upper coolant inlet 120 and separator chamber 110 may be arranged so that the coolant enters the enters the separator chamber 110 through the upper coolant inlet 120 tangentially to an interior surface of the separator chamber 110 at the increased flow velocity. This may help to encourage a swirling motion of the coolant in the separator chamber 110.

The separator chamber 110is in fluid communication with the upper coolant inlet 120 and is configured to deaerate gas from the coolant in a swirling motion produced by the increased flow velocity of the coolant entering the separator chamber 110 through the upper coolant inlet 120. The upper coolant inlet 120 may be designed to be positioned adjacent to an upper portion of the separator chamber 110. When the coolant enters the separator chamber 110 with the increased flow velocity in a direction that is tangential to the curved inner surface of the separator chamber 110, the swirling motion is produced.

The swirling motion generates a centrifugal force radially outwards from a central axis of the separator chamber 110. Accordingly, heavy coolant molecules may be moved towards a periphery of the separator chamber 110 by the centrifugal force and thus may push light gas molecule towards a low pressure region closer toa central axis of the separator chamber 110. The top gas outlet 130 may be in gaseous communication with the separator chamber 110 and configured to exhaust the gas deaerated from the coolant in the swirling motion out of the separator chamber 110. The top gas outlet 130 may be positioned on the central axis of the separator chamber 110. A great portion of gas may be removed from the coolant via the swirling motion of the coolant, and thus the gas may be removed from the coolant much more quickly.

The centrifugal gas-coolant separator 100 may further include a separator casing 150. The separator casing 150 defines the separator chamber 110, and may include a top separator surface 152. The top gas outlet 130 may be formed on the top separator surface 152. Accordingly, as gas usually flows upwards, gas exhaustion may be facilitated via the top gas outlet 130 formed on the top separator surface 152.

The centrifugal gas-coolant separator 100 further includes a lower coolant outlet 140. The lower coolant outlet 140 is in fluid communication with the separator chamber 110 and configured to drain the coolant out of the separator chamber 110. Advantageously, before the coolant is drained out of the separator chamber 110 through the lower coolant outlet 140, the gas is deaerated from the coolant in the separator chamber 110.

The lower coolant outlet 140 may be located opposite to the top gas outlet 130, and thus the coolant may flow downwards due to gravity to the lower coolant outlet 140, while the separated gas may flow upwards to the top gas outlet 130 without disturbing the flow of the coolant.

The expansion tank 200 may include an upper gas inlet 220, and a tank chamber 210. The upper gas inlet 220 may be coupled with the top gas outlet 130 of the gas-coolant separator 100 and may be configured to receive the gas from the top gas outlet 130. The gas may flow to the tank chamber 210 from the separator chamber 110 through the top gas outlet 130 and the upper gas inlet 220.

The tank chamber 210 is in gaseous communication with the upper gas inlet 220 and is configured to accommodate the gas entering the tank chamber 210 through the upper gas inlet 220. Accordingly, the gas may be vented from the separator chamber 110 to an airspace in the tank chamber 210. The expansion tank 200 may further include a tank casing 270. The tank casing 270 defines the tank chamber 210. The tank casing 270 may include a top tank surface 272, and the upper gas inlet 220 may be formed on the top tank surface 272.

The expansion tank 200 may further include an upper gas exhaust port 230. The upper gas exhaust port 230 is in gaseous communication with the tank chamber 210 and is configured to exhaust the gas out of the tank chamber 210 to, for instance, the atmosphere. The expansion tank 200 may further include a breather cap or a filler cap covering the upper gas exhaust port 230. For example, when the breather cap or the filler cap is moved away from the upper gas exhaust port 230, the gas may escape from the tank chamber 210 through the upper gas exhaust port 230. Additionally, supplemental coolant may be poured into the tank chamber 210 through the upper gas exhaust port 230. The upper gas exhaust port 230 may be formed on the top tank surface 272. Accordingly, gas exhaustion may be facilitated. The tank chamber 210 is further configured to accommodate the coolant. The expansion tank 200 may further include a lower coolant drain port 240. The lower coolant drain port 240 is in fluid communication with the tank chamber 210 and configured to drain the coolant out of the tank chamber 210. The lower coolant drain port 240 may be designed to be positioned adjacent to a lower portion of the tank chamber 210. The lower coolant drain port 240 is further configured to be coupled with the cooling/heating system 2 and drain or return the coolant into the cooling/heating system 2.

In some aspects, the inlet fluid accelerator 10 may be further configured to be coupled with a cooling/heating system 2 of the vehicle and receive the coolant from the cooling/heating system 2, as illustrated in **FIG. 1****.**

The coolant deaeration system 1 may further include a nozzle 120, as shown in FIG. 2. The nozzle 120 may be also coupled with the upper coolant inlet 120 opposite the inlet fluid accelerator 10 and configured to further increase the flow velocity of the coolant and inject the coolant with the further increased flow velocity into the separator chamber 110.

The coolant deaeration system 1 may further include an electric control unit (ECU) 300, as shown in **FIGs. 1-2****.** The ECU 300 may be electrically coupled with the inlet fluid accelerator 10and may be configured to control operations of the centrifugal gas-coolant separator 100 via the inlet fluid accelerator 10. The inlet fluid accelerator 10is operated, such as operatively turned on and off, by the ECU 300. For example, when the ECU 300 turns on the inlet fluid accelerator 10 during the operation period of the vehicle, the inlet fluid accelerator 10 may increase the flow velocity of the coolant from the cooling/heating system 2.

When the ECU 300 turns off the inlet fluid accelerator 10 during the operation period of the vehicle or after the vehicle is not operated, the inlet fluid accelerator 10 may not increase the flow velocity of the coolant, or may decrease the flow velocity of the coolant, or even may prevent or obstruct the coolant from passing therethrough.

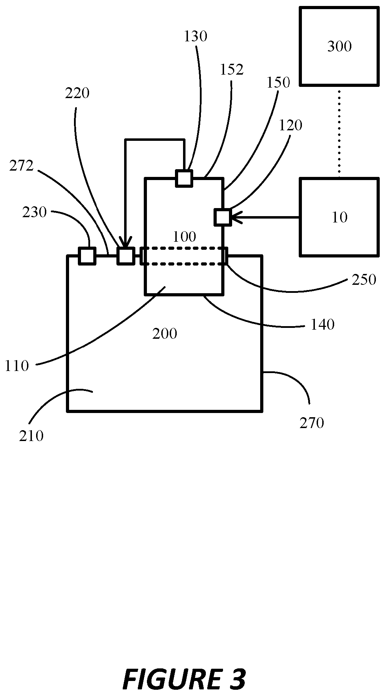

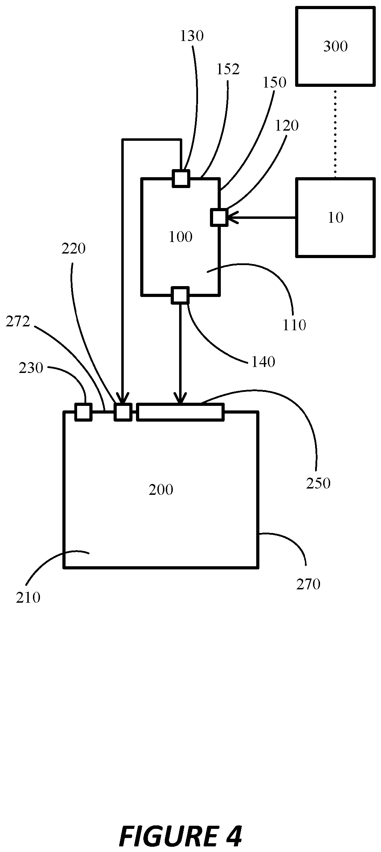

In some aspects, the centrifugal gas-coolant separator 100 may be integrated with the expansion tank 200, as shown in **FIG. 3****.** In other words, the centrifugal gas-coolant separator 100 may be an integrated part of the expansion tank 200. For example, the centrifugal gas-coolant separator 100 may be provided within or integral to the expansion tank 200, to that assembly cost, time, and/or complexity may be reduced. Alternatively, the centrifugal gas-coolant separator 100 may be separated from the expansion tank 200, as shown in **FIG. 4** which is an exemplary schematic diagram illustrating a centrifugal gas-coolant separator 100 separated from an expansion tank 200 according to some examples. As such, maintenance may be simplified, as separated parts may be easier to be replaced or fixed during a maintenance service.

The expansion tank 200 may further include an upper coolant entrance 250, as shown in **FIGs. 3-4****.** The upper coolant entrance 250 may be coupled with the lower coolant outlet 140. For example, the lower coolant outlet 140 may be inserted into the upper coolant entrance 250, and configured to receive the coolant through the lower coolant outlet 140. The tank chamber 210 may be in fluid communication with the upper coolant entrance 250 and may be further configured to accommodate the coolant entering the tank chamber 210 through the upper coolant entrance 250. The upper coolant entrance 250 may be designed to be positioned higher (at a larger elevation) than a maximum coolant level (at a lower elevation) in the tank chamber 210, or adjacent to an upper portion of the tank chamber 210. Accordingly, after the gas is deaerated from the coolant in the separator chamber 110, the coolant may be drained out of the separator chamber 110 through the lower coolant outlet 140 and the upper coolant entrance 250 into the tank chamber 210. Since a great portion of gas may be removed from the coolant via the swirling motion of the coolant in the separator chamber 110 in advance, the expansion tank 200 may no longer need to have a large surface area, and a smaller expansion tank 200 may be used for easier and better packaging.

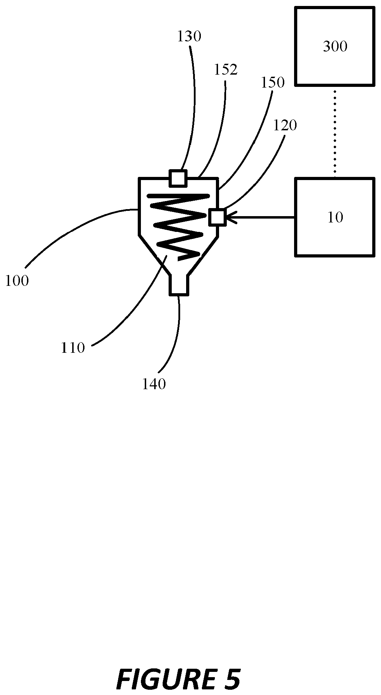

**FIG. 5** is an exemplary schematic diagram illustrating a centrifugal gas-coolant separator 100 having a funnel shape according to some examples. As shown therein. in the coolant deaeration system 1, the centrifugal gas-coolant separator 100 may have a funnel shape. Preferably, a size or radius or diameter of the centrifugal gas-coolant separator 100 may gradually decrease from the top gas outlet 130 to the lower coolant outlet 140. The centrifugal gas-coolant separator 100 may have different shapes, such as a conical or cylindrical shape, that may also contribute to swirl the coolant in separator chamber 110 for separating the gas and the coolant with great effectiveness and predictability.

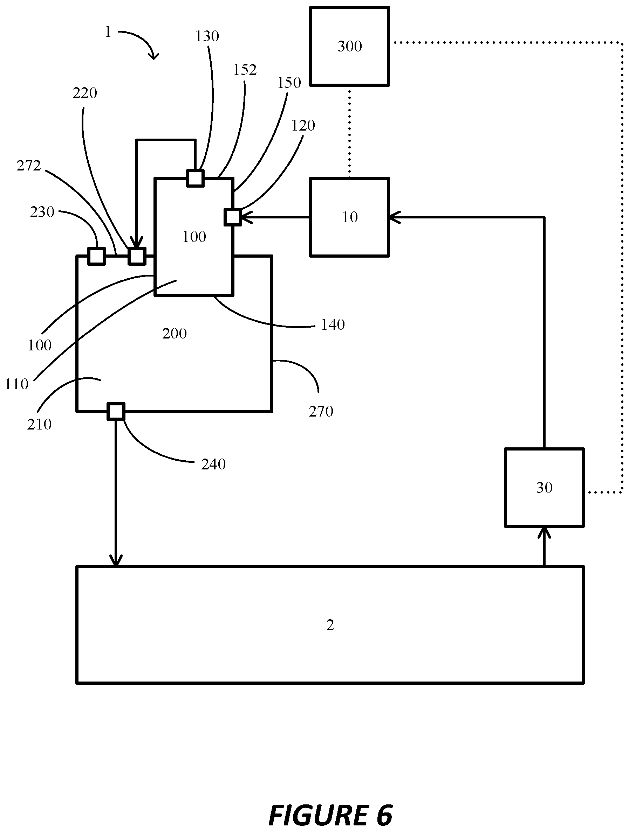

In some aspects, the coolant deaeration system 1 may further include a deaerating valve 30, as illustrated in **FIG. 6****,** which is an exemplary schematic diagram illustrating components of a coolant deaeration system 1 cooperating with a cooling/heating system 2 of a vehicle according to some examples. The deaerating valve 30 may be a quick connector valve, and may be coupled with the inlet fluid accelerator 10 and configured to be coupled with the cooling/heating system 2.

The deaerating valve 30 may actively or automatically bleed gas out when receiving the coolant from the cooling/heating system 2. The inlet fluid accelerator 10 may be further configured to receive the coolant via the deaerating valve 30. The ECU 300 may be electrically coupled with the deaerating valve 30 and configured to control operations of the centrifugal gas-coolant separator 100 via the deaerating valve 30 which may be operated, such as operatively switched open and closed, by the ECU 300. For example, when there may be gas pockets still appeared, the deaerating valve 30 may be switched open, such that the gas pockets may be purged out via the deaerating valve 30 before entering the inlet fluid accelerator 10.

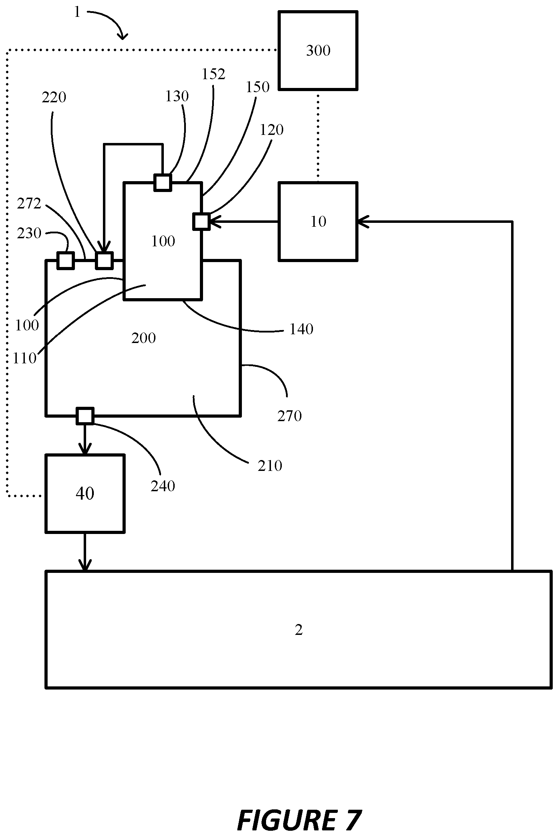

In some aspects, the coolant deaeration system 1 may further include a lower drain valve 40, as shown in **FIG. 7** which is an exemplary schematic diagram illustrating components of a coolant deaeration system 1 cooperating with a cooling/heating system 2 of a vehicle according to some examples. The lower drain valve 40 may be a solenoid valve. The lower drain valve 40 may be coupled with the lower coolant drain port 240 and configured to be coupled with the cooling/heating system 2 to drain or return the coolant into the cooling/heating system 2. The lower coolant drain port 240 may be further configured to be coupled with and drain or return the coolant into the cooling/heating system 2 via the lower drain valve 40.

The ECU 300 may be electrically coupled with the lower drain valve 40 and configured to control operations of the expansion tank 200 via the lower drain valve 40 which may be operated, such as operatively switched open and closed, by the ECU 300. For example, when the ECU 300 switch the lower drain valve 40 open, the coolant may flow from the lower coolant drain port 240 to the cooling/heating system 2. Additionally, when the ECU 300 switches the lower drain valve 40 closed, the lower drain valve 40 may prevent the coolant from flowing to the cooling/heating system 2. Accordingly, an entire deaeration circuit may be totally inactive or shut-off by closing the lower drain valve 40 and/or switching the pump 10 off.

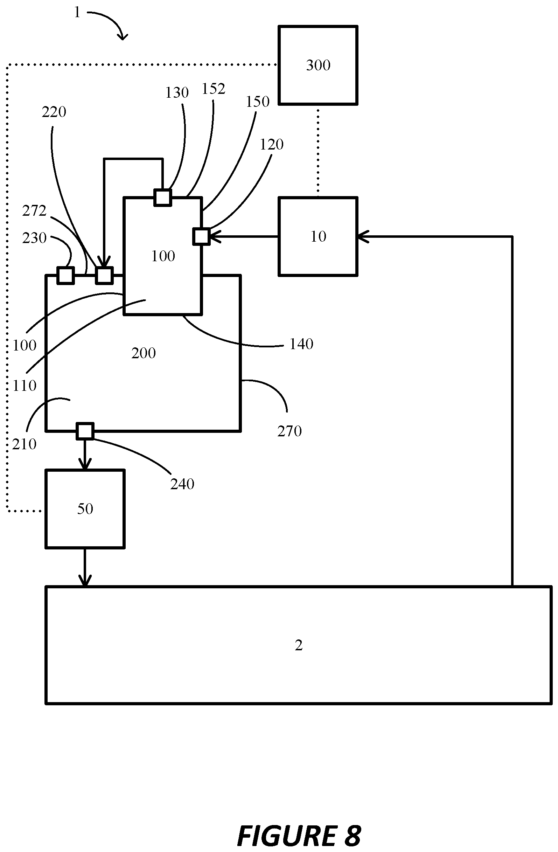

In some aspects, alternatively, the coolant deaeration system 1may further include a flow control valve 50, as illustrated in **FIG. 8****,** which is an exemplary schematic diagram illustrating components of a coolant deaeration system 1 cooperating with a cooling/heating system 2 of a vehicle according to some examples. The flow control valve 50 may be coupled with the lower coolant drain port 240 and configured to be coupled with the cooling/heating system 2 and drain or return the coolant into the cooling/heating system 2. The lower coolant drain port 240 may be further configured to be coupled with and drain or return the coolant into the cooling/heating system 2 via the flow control valve 50. The flow control valve 50 may be used to control a flow rate of the coolant from the lower coolant drain port 240 to the cooling/heating system 2.

The ECU 300 may be electrically coupled with the flow control valve 50 and configured to control operations of the expansion tank 200 via the flow control valve 50 which may be operated, such as operatively controlled to be open, partially open, or closed, by the ECU 300. In some embodiments, the flow control valve 50 may be an electrically controlled rotary valve. For example, based on a sensor feedback that a dissolved gas level in the coolant is above a predetermined value, the flow control valve 50 may be switched open to increase the flow rate of the coolant flowing therethrough, such that the flow rate of the coolant flowing into the separator chamber 110 and/or tank chamber 210 may also be increased. Accordingly, overall deaeration may be increased. On the other hand, when the coolant deaeration system 1 is in a normal working condition, the flow control valve 50 may be at least partially closed , such that the flow rate of the coolant flowing therethrough may be maintained or decreased.

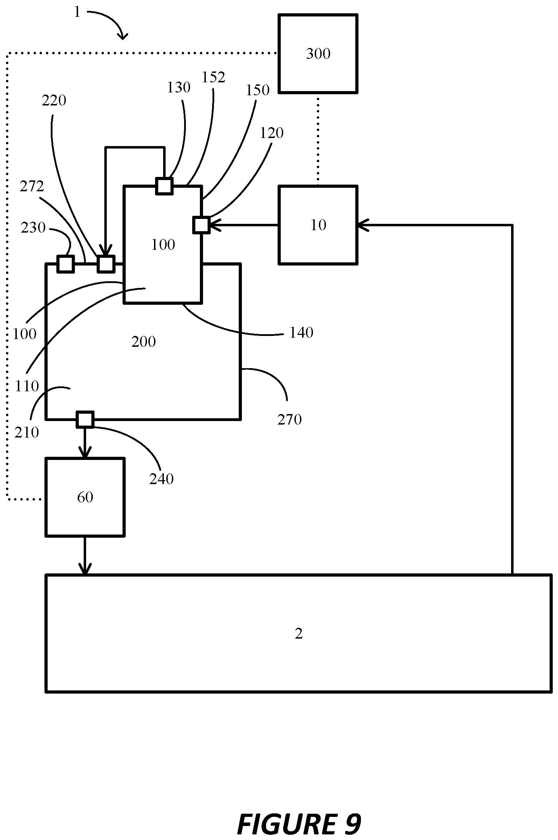

In some aspects, alternatively, the coolant deaeration system 1 may further include an outlet pump 60, as illustrated in **FIG. 9****,** which is an exemplary schematic diagram illustrating components of a coolant deaeration system 1 cooperating with a cooling/heating system 2 of a vehicle according to some examples. The outlet pump 60 may, for example, be a booster pump. The outlet pump 60 may be coupled with the lower coolant drain port 240 and configured to be coupled with the cooling/heating system 2 and drain or return the coolant into the cooling/heating system 2. The lower coolant drain port 240 may be further configured to be coupled with and drain or return the coolant into the cooling/heating system 2 via the outlet pump 60.

The ECU 300 may be electrically coupled with the outlet pump 60 and configured to control operations of the expansion tank 200 via the outlet pump 60 which may be operated, such as operatively turned on and off, by the ECU 300. For example, when a deaeration demand may be high, the outlet pump 60 may be turned on, which may result in that more coolant may flow through the centrifugal gas-coolant separator 100 and the expansion tank 200, and in that more gas may be separated from the coolant. The outlet pump 60 may be turned on for a period until the dissolved gas reaches a predetermined lower value.

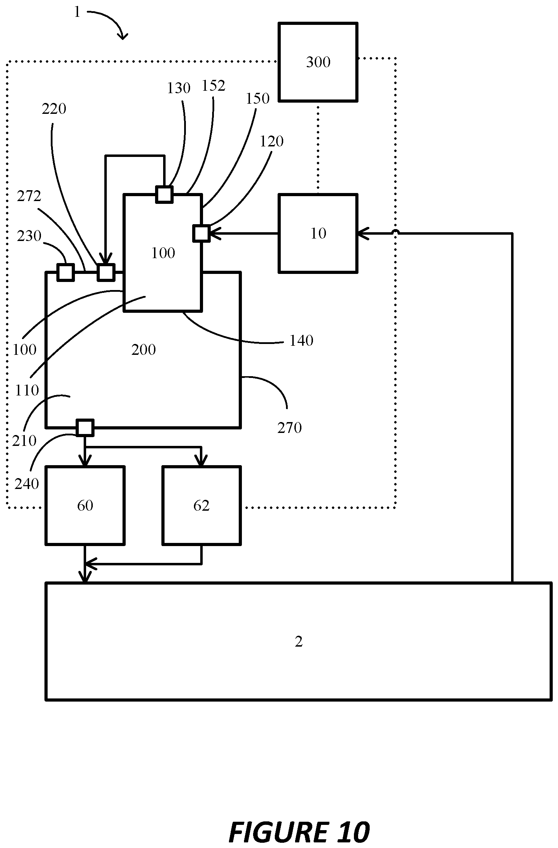

Additionally, the coolant deaeration system 1 may further include a bypass valve 62, as shown in **FIG. 10****,** which is an exemplary schematic diagram illustrating components of a coolant deaeration system 1 cooperating with a cooling/heating system 2 of a vehicle according to some examples. The bypass valve 62 may be coupled with the lower coolant drain port 240 and configured to be coupled with the cooling/heating system 2 and drain or return the coolant into the cooling/heating system 2. The lower coolant drain port 240 may be further configured to be coupled with and drain or return the coolant into the cooling/heating system 2 via the bypass valve 62. The ECU 300 may be electrically coupled with the outlet pump 60 and configured to control operations of the expansion tank 200 via the bypass valve 62 which may be operated, such as operatively switched open and closed, by the ECU 300. The bypass valve 62 may be in parallel connection with the outlet pump 60. For example, when the outlet pump 60 is turned on, the bypass valve 62 may be closed. Additionally, the bypass valve 62 may be switched open when the outlet pump 60 is turned off, such that a normal operation of the coolant deaeration system 1 may be resumed.

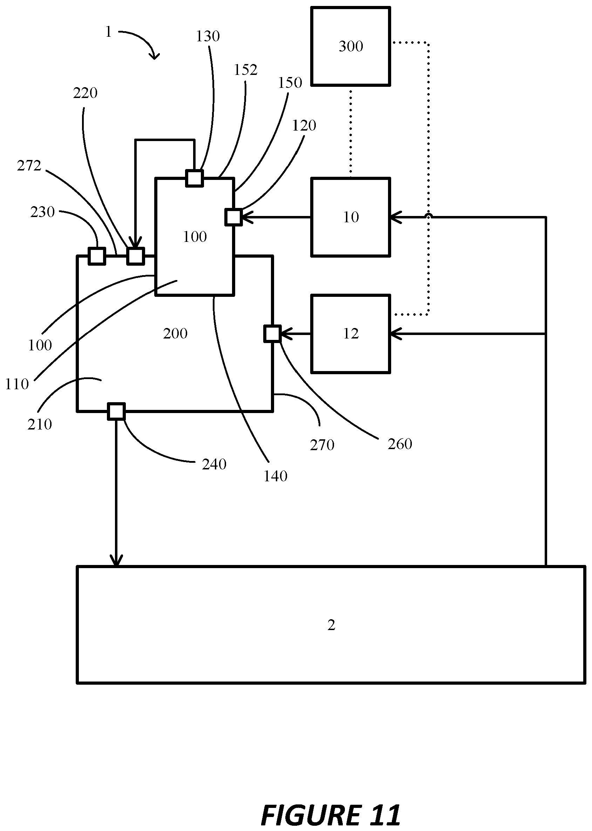

In some aspects, the coolant deaeration system 1 may further include an intake valve 12, as illustrated in **FIG. 11****,** which is an exemplary schematic diagram illustrating components of a coolant deaeration system 1 cooperating with a cooling/heating system 2 of a vehicle according to some examples. The intake valve 12 may, for example, be a solenoid valve. The intake valve 12 may be configured to be coupled with the cooling/heating system 2 and receive the coolant from the cooling/heating system 2. The expansion tank 200 may further include an upper coolant intake port 260. The upper coolant intake port 260 may be coupled with the intake valve 12 and configured to receive the coolant via the intake valve 12. The tank chamber 210 may be in fluid communication with the upper coolant intake port 260 and further configured to accommodate the coolant entering the tank chamber 210 through the upper coolant intake port 260. The intake valve 12 and the intake port 260 may be formed as a single unit. Moreover, a separate pump (not shown) may be provided in the cooling/heating system 2 or the coolant deaeration system 1 to pump coolant from the cooling/heating system 2 to the intake valve 12.

The ECU 300 may be electrically coupled with the intake valve 12 and configured to control operations of the expansion tank 200 via the intake valve 12 which may be operated, such as operatively controlled to be open, closed, or partially open, by the ECU 300. The intake valve 12 may be in parallel connection with the inlet fluid accelerator 10. For example, the ECU 300 may switch the intake valve 12 open when the inlet fluid accelerator 10, such as the inlet pump or the input nozzle, is turned off during the operation period of the vehicle, such that enough coolant still may flow from the cooling/heating system 2 through the intake valve 12 and the upper coolant intake port 260 into the tank chamber 210. Accordingly, deaeration may also occur in the tank chamber 210, and fluid expansion and contraction may still be ensured.

On the other hand, the ECU 300 may switch the intake valve 12 closed to prevent the coolant from passing through the intake valve 12 when the ECU 300 turns on the inlet fluid accelerator 10 during the operation period of the vehicle. Accordingly, the inlet fluid accelerator 10, such as the inlet pump, may not pull gas and/or coolant out of the tank chamber 210 due to pump suction.

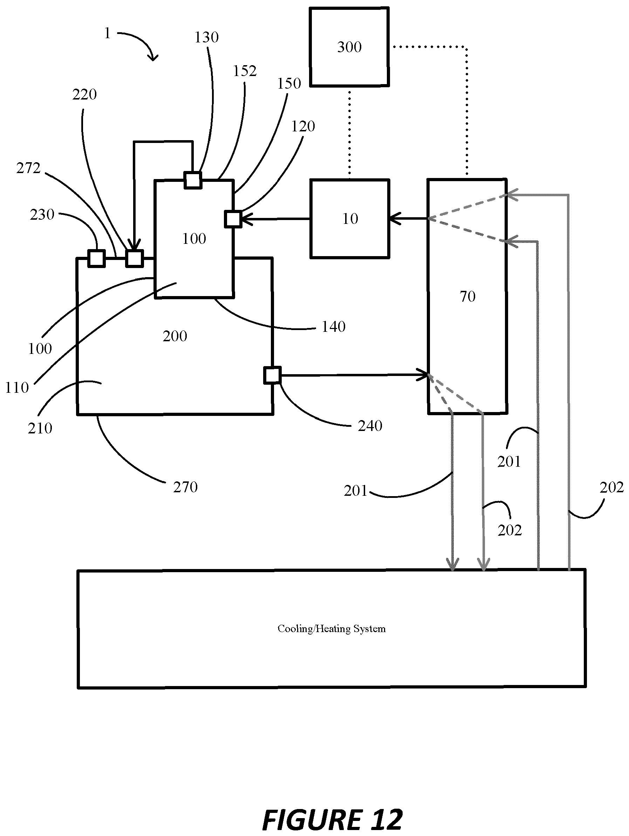

Reference now is made to **FIGs. 12-16****.** The cooling/heating system 2 may include a cold coolant line 201 and a hot coolant line 202. In some aspects, the coolant deaeration system 1 may further include a distribution and equalizer valve 70, as shown in **FIG. 12****,** which is an exemplary schematic diagram illustrating components of a coolant deaeration system 1 cooperating with a cooling/heating system 2 of a vehicle according to some examples.

Referring to **FIG. 12****,** the distribution and equalizer valve 70 may be coupled with the inlet fluid accelerator 10 and the lower coolant drain port 240 and may be configured to be selectively coupled with the cold coolant line 201 and the hot coolant line 202 and operatively couple the cold coolant line 201 and the hot coolant line 202 to/from the coolant deaeration system 1. Accordingly, by using the distribution and equalizer valve 70, there may be no need to provide separate expansion tanks for the cold coolant line 201 and the hot coolant line 202 of the cooling/heating system 2.

The inlet fluid accelerator 10 may be configured to be coupled with and further configured to receive the coolant from the cold coolant line 201 and the hot coolant line 202 via the distribution and equalizer valve 70. The lower coolant drain port 240 may be further configured to be coupled with and drain or return the coolant into the cold coolant line 201 and the hot coolant line 202 via the distribution and equalizer valve 70. The ECU 300 may be electrically coupled with the distribution and equalizer valve 70 and configured to control operations of the centrifugal gas-coolant separator 100 and the expansion tank 200 via the distribution and equalizer valve 70 which may be operated, such as operatively switched on and off, by the ECU 300.

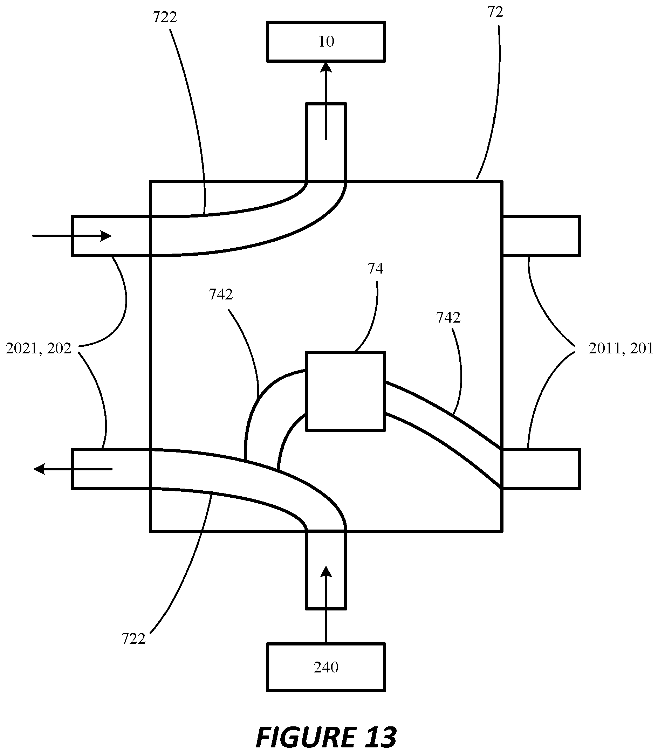

**FIGs. 13-16** are exemplary schematic diagrams illustrating a distribution and equalizer valve 70 of a coolant deaeration system according to some examples. Referring to **FIG. 13****,** the distribution and equalizer valve 70 may include a distribution valve 72, an equalizer valve 74, and at least two distribution passages 722. The at least two distribution passages 722 may be integrated with the distribution valve 72. The distribution valve 72 may have a hot coolant configuration and a cold coolant configuration to selectively couple the at least two distribution passages 722 respectively with cold coolant sub-lines 2011 of the cold coolant line 201 and hot coolant sub-lines 2021 of the hot coolant line 202. That is, in the hot coolant configuration, the hot coolant lines 202 may be connected to the lower coolant drain port 240 and the inlet fluid accelerator 10, while the cold coolant lines 201 are inactive. Likewise, in the cold coolant configuration, the cold coolant lines 201 may be connected to the lower coolant drain port 240 and the inlet fluid accelerator 10, while the hot coolant lines 202 are inactive. Switching between the hot coolant configuration and the cold coolant configuration may be performed by, for instance, a valve rotor of the distribution and equalizer valve 70.

For example, when the distribution valve 72 is in the hot coolant configuration, the distribution valve 72 may couple the at least two distribution passages 722 respectively with the hot coolant sub-lines 2021, as shown in **FIGs. 13-14****,** such that hot coolant may flow from the cooling/heating system 2 through one of the hot coolant sub-lines 2021 and one of the at least two distribution passages 722 to the inlet fluid accelerator 10, and thereafter from the lower coolant drain port 240 through another one of the at least two distribution passages 722 and another one of the hot coolant sub-lines 2021 back to the cooling/heating system 2.

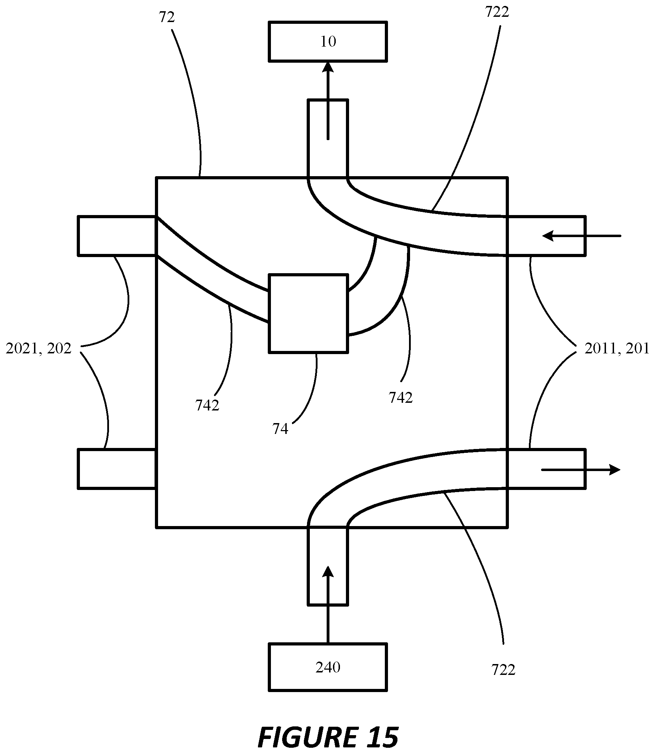

On the other hand, when the distribution valve 72 is in the cold coolant configuration, the distribution valve 72 may couple the at least two distribution passages 722 respectively with the cold coolant sub-lines 2011, as illustrated in **FIGs. 15-16****,** such that cold coolant may flow from the cooling/heating system 2 through one of the cold coolant sub-lines 2011 and one of the at least two distribution passages 722 to the inlet fluid accelerator 10, and thereafter from the lower coolant drain port 240 through another one of the at least two distribution passages 722 and another one of the cold coolant sub-lines 2011 back to the cooling/heating system 2.

Now referring to **FIGs. 13-16****,** the distribution and equalizer valve 70 may further include an equalizer valve 74 and an equalizer passage 742. The one equalizer valve 74 may be used to regulate pressure in the inactive circuit (e.g., the cold coolant lines 201 when the distribution and equalizer valve 70 is in the hot coolant configuration, and vice-versa), to thereby compensate for thermal contraction and expansion. The equalizer passage 742 may be in fluid communication with the equalizer valve 74. The equalizer valve 74 and the equalizer passage 742 also may be integrated with the distribution valve 72.

The equalizer passage 742 may be in fluid communication with at least one of the distribution passages 722. The distribution valve 72 may have the hot coolant configuration and the cold coolant configuration to selectively couple the equalizer passage 742 with one of the cold coolant sub-lines 2011 and one of the hot coolant sub-lines 2021. The equalizer valve 74 may operatively couple one of the cold coolant sub-lines 2011 with one of the hot coolant sub-lines 2021 via the equalizer passage 742 and one of the distribution passages 722.

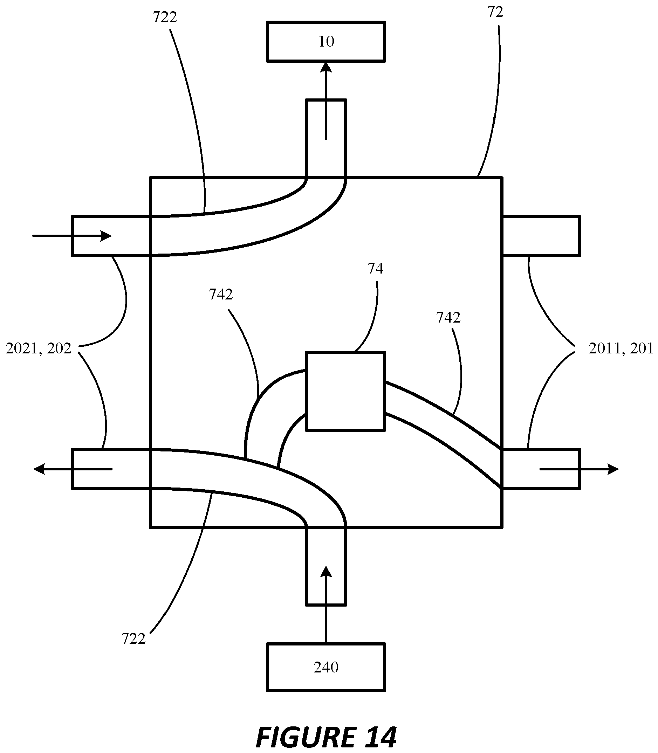

For example, as reflected in **FIG. 13****,** when the distribution valve 72 is in the hot coolant configuration, the equalizer valve 74 may couple one of the cold coolant sub-lines 2011 with one of the hot coolant sub-lines 2021 via the equalizer passage 742 and one of the distribution passages 722, and may be operated, i.e., switched open, as can be observed in **FIG. 14****,** such that hot coolant, for instance a small amount of hot coolant, may flow from the lower coolant drain port 240 through the one of the distribution passages 722, the equalizer passage 742, and the one of the cold coolant sub-lines 2011 back to the cooling/heating system 2 when there may be a pressure difference between the cold coolant line 201 and the hot coolant line 202 so as to compensate for thermal contraction.

Alternatively or additionally, the one equalizer valve 74 may be operated, while not shown, such that hot coolant may flow from the cooling/heating system 2 through another one of hot coolant sub-lines 2021, another one of the distribution passages 722, the equalizer passage 742, and the one of the cold coolant sub-lines 2011 back to the cooling/heating system 2.

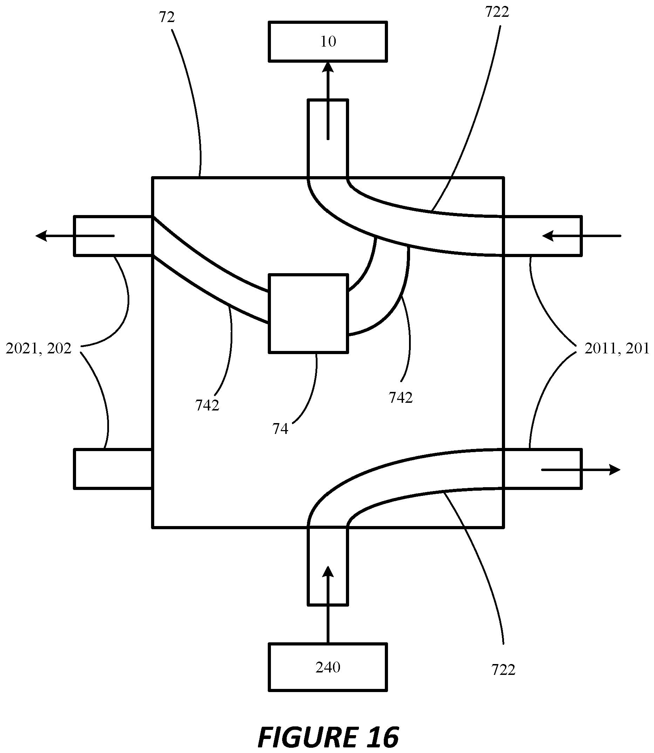

On the other hand, similarly, as shown in **FIG. 15****,** when the distribution valve 72 may be in the cold coolant configuration, the one equalizer valve 74 may couple one of the cold coolant sub-lines 2011 with one of the hot coolant sub-lines 2021 via the equalizer passage 742 and one of the distribution passages 722, and may be operated, as illustrated in **FIG. 16****,** such that cold coolant may flow from the cooling/heating system 2 through the one of the cold coolant sub-lines 2011, the one of the distribution passages 722, the equalizer passage 742, and the one of the hot coolant sub-lines 2021 back to the cooling/heating system 2.

Alternatively or additionally, the equalizer valve 74 may be operated, while not shown, such that cold coolant may flow from the lower coolant drain port 240 through another one of the distribution passages 722, the equalizer passage 742, and another one of the cold coolant sub-lines 2011 back to the cooling/heating system 2.

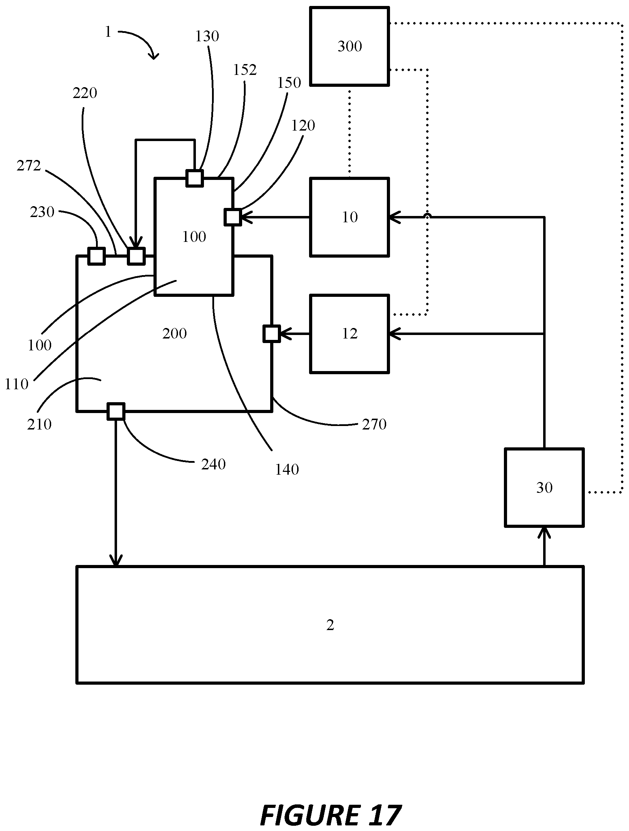

**FIGs. 17-28** are exemplary schematic diagrams illustrating components of a coolant deaeration system 1 cooperating with a cooling/heating system 2 of a vehicle according to some examples. In some aspects, deaerating valve 30 may be coupled to the intake valve 12, the inlet fluid accelerator 10 and/or the distribution and equalizer valve 70. For example, as shown in **FIG. 17****,** the inlet fluid accelerator 10 may be coupled to the intake valve 12 and the deaerating valve 30, while the deaerating valve 30 is between the inlet fluid accelerator 10 and the cooling/heating system 2 and between the intake valve 12 and the cooling/heating system 2.

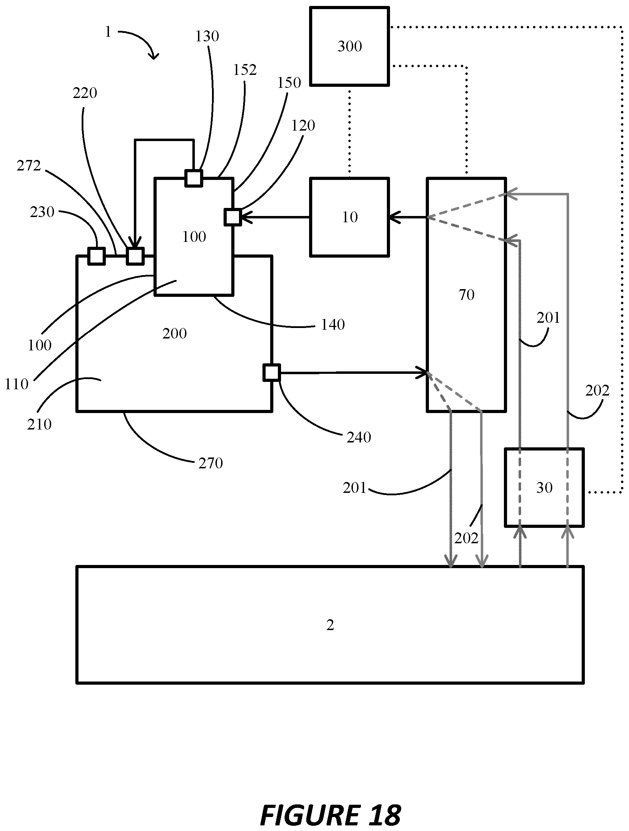

As shown in **FIG. 18****,** in some examples, the inlet fluid accelerator 10 may be coupled to the distribution and equalizer valve 70 and the deaerating valve 30, while the distribution and equalizer valve 70 may be between the inlet fluid accelerator 10 and the deaerating valve 30.

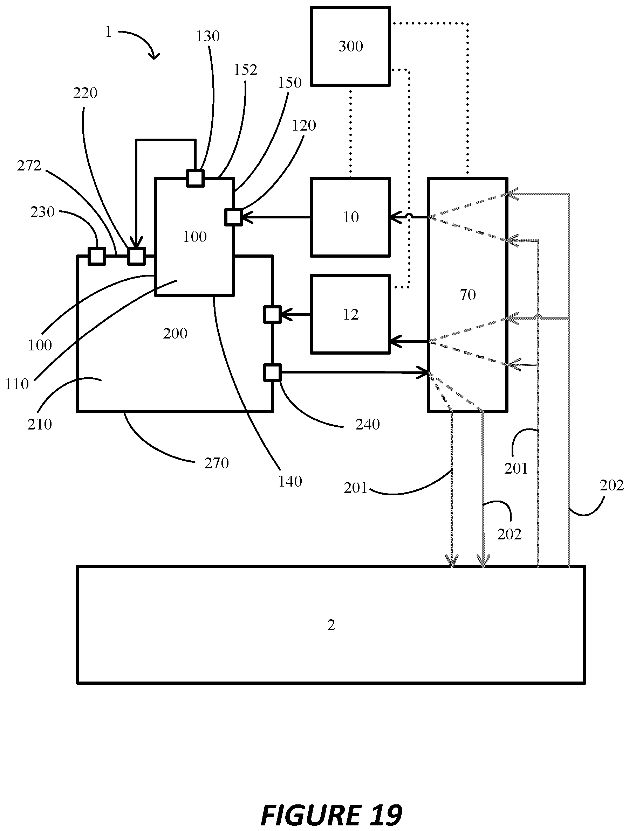

As shown in **FIG. 19****,** in some examples, the inlet fluid accelerator 10 may be coupled to the distribution and equalizer valve 70, while the distribution and equalizer valve 70 may be in connection between the inlet fluid accelerator 10 and the cooling/heating system 2 and between the intake valve 12 and the cooling/heating system 2.

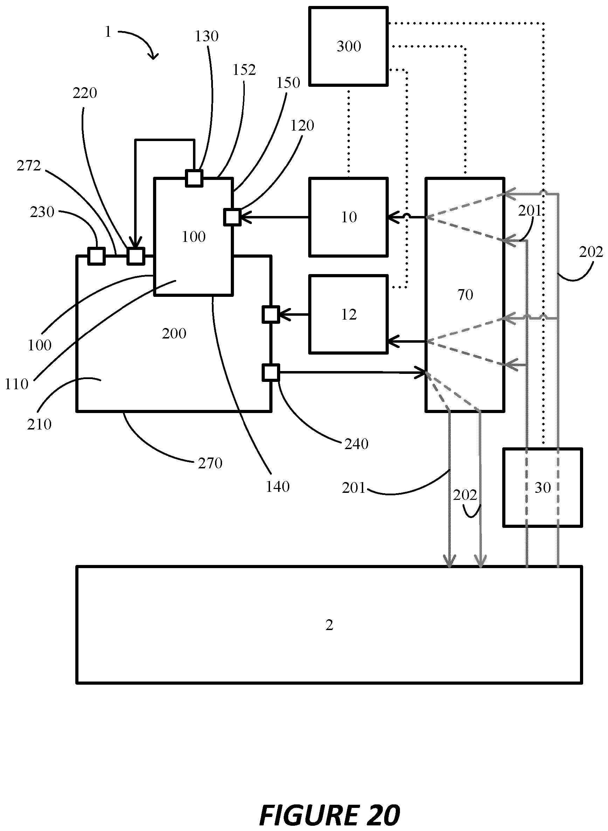

As shown in **FIG. 20****,** in some embodiments, the inlet fluid accelerator 10 may be coupled to the deaerating valve 30 through the distribution and equalizer valve 70, while the deaerating valve 30 may be between the distribution and equalizer valve 70 and the cooling/heating system 2, and the distribution and equalizer valve 70 may be between the inlet fluid accelerator 10 and the deaerating valve 30 and between the intake valve 12 and the deaerating valve 30.

Moreover, in addition to that the inlet fluid accelerator 10 may be cooperated with at least one of the intake valve 12, the deaerating valve 30, and the distribution and equalizer valve 70, the lower coolant drain port 240 may be further cooperated with the lower drain valve 40, or the flow control valve 50, or the outlet pump 60, or the combination of the outlet pump 60 and the bypass valve 62, and/or the distribution and equalizer valve 70, and thus may be indirectly in connection with the cooling/heating system 2.

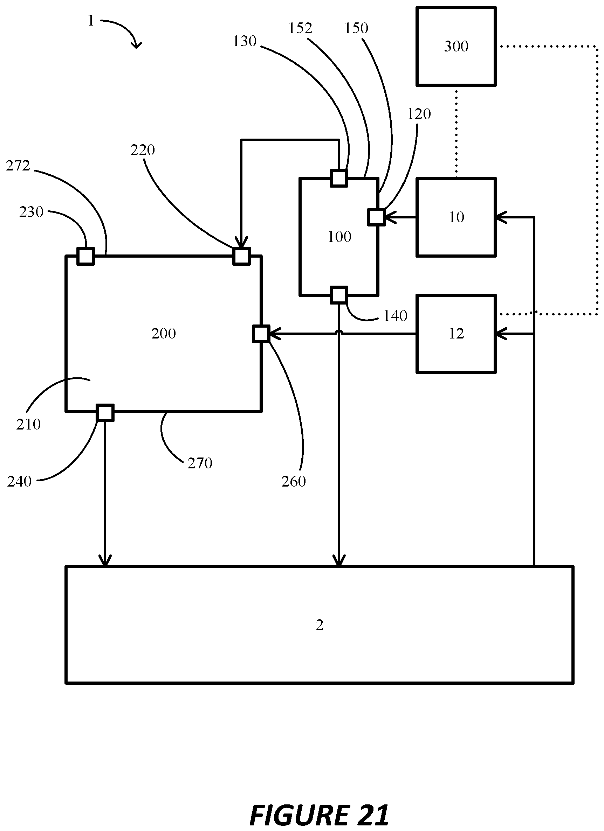

Reference now is made to **FIG. 21****.** In some aspects, a coolant deaeration system 1 for deaerating a coolant of a vehicle may be provided. Structures and components of the coolant deaeration system 1 in some aspects may be similar to structures and components of the coolant deaeration system 1 in the previously recited aspect. In some aspects, the centrifugal gas-coolant separator 100 may be separated from the expansion tank 200, as shown in **FIGs. 21-22****.**

In some aspects, in the coolant deaeration system 1, the lower coolant outlet 140, in addition to draining the coolant out of the separator chamber 110, may be further configured to couple with the cooling/heating system 2 and drain or return the coolant into the cooling/heating system 2, as illustrated in **FIG. 21****.** In some aspects, the inlet fluid accelerator 10 may be cooperated with the intake valve 12. In some aspects, the coolant may flow from the cooling/heating system 2 into the separator chamber 110 and the tank chamber 210, while the coolant drained out of the separator chamber 110 may not be mixed with the coolant accommodated within the tank chamber 210. For example, the tank chamber 210 may initially accommodate a certain amount of cold coolant when the vehicle may not be operated. After the vehicle may start to be operated, the pump 10 may be turned on, and the coolant drained out of the separator chamber 110 may be still hot. Accordingly, hot coolant from the separator chamber 110 may not be mixed with cold coolant within the tank chamber 210. The intake valve 12 may be in parallel connection with the inlet fluid accelerator 10.

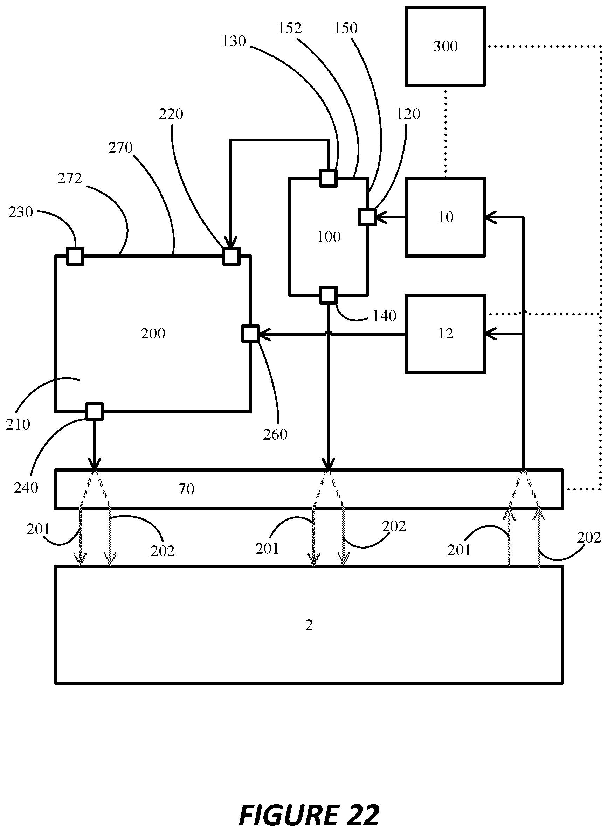

In some aspects, the inlet fluid accelerator 10 may be operate along with the distribution and equalizer valve 70, as shown in **FIG. 22****.** The distribution and equalizer valve 70 may be coupled with the inlet fluid accelerator 10, the intake valve 12, the lower coolant outlet 140, and the lower coolant drain port 240, respectively. The lower coolant outlet 140 and the lower coolant drain port 240 each may be further configured to be coupled with and drain or return the coolant into the cold coolant line 201 and the hot coolant line 202 via the distribution and equalizer valve 70.

Similarly, moreover, in addition to the inlet fluid accelerator 10 being operable along with the distribution and equalizer valve 70, the inlet fluid accelerator 10 may be further, or alternatively, operate along with the deaerating valve 30, while the lower coolant drain port 240 may be further cooperated or coupled with the lower drain valve 40, or the flow control valve 50, or the outlet pump 60, or the combination of the outlet pump 60 and the bypass valve 62, and/or the distribution and equalizer valve 70, and thus may be indirectly in connection with the cooling/heating system 2. In addition, the lower coolant outlet 140 may also be coupled with the lower drain valve 40, or the flow control valve 50, or the outlet pump 60, or the combination of the outlet pump 60 and the bypass valve 62, and thus may be indirectly connected with the cooling/heating system 2.

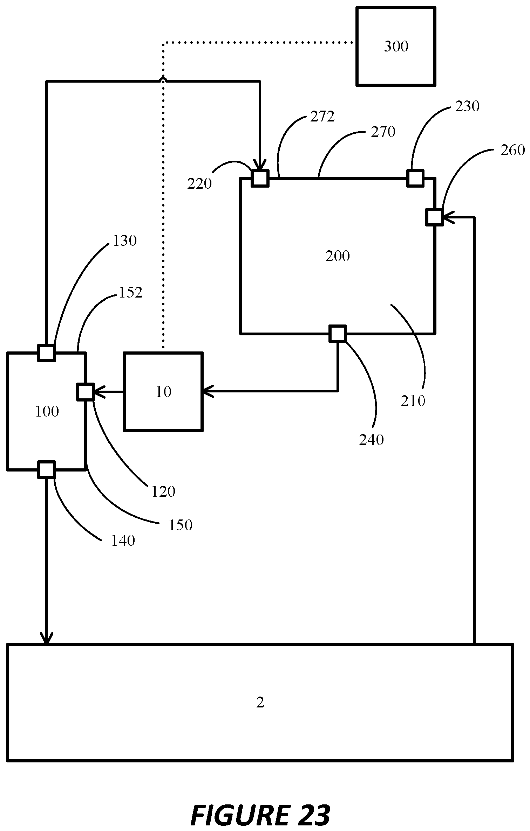

Referring to **FIG. 23****,** in some aspects, a coolant deaeration system 1 for deaerating a coolant of a vehicle may be provided. Structures and components of the coolant deaeration system 1 in some aspects may be similar to structures and components of the coolant deaeration system 1 in the previously recited aspects. In some aspects, in the coolant deaeration system 1, the upper coolant intake port 260 may be configured to be coupled with the cooling/heating system 2 and receive the coolant from the cooling/heating system 2. The tank chamber 210 may be in fluid communication with the upper coolant intake port 260 and further configured to accommodate the coolant entering the tank chamber 210 through the upper coolant intake port 260.

In some aspects, the lower coolant drain port 240 may be in fluid communication with the tank chamber 210 and configured to drain the coolant out of the tank chamber 210. In some aspects, the inlet fluid accelerator 10 may be coupled with the lower coolant drain port 240 and further configured to receive the coolant through the lower coolant drain port 240. In some aspects, in the coolant deaeration system 1, the lower coolant outlet 140, in addition to draining the coolant out of the separator chamber 110, may be further configured to couple with the cooling/heating system 2 and drain or return the coolant into the cooling/heating system 2, as shown in **FIG. 23****.**

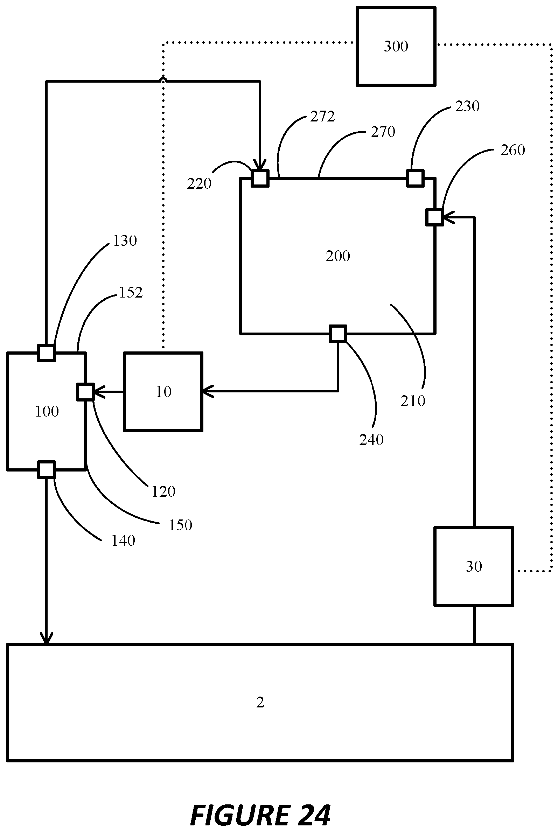

In some aspects, the deaerating valve 30 may be coupled with the upper coolant intake port 260 and configured to be coupled with the cooling/heating system 2 and actively bleed the gas out when receiving the coolant from the cooling/heating system 2, as can be seen in **FIG. 24****.** The upper coolant intake port 260 receive the coolant via the deaerating valve 30. The ECU 300 may be electrically coupled with the deaerating valve 30 and configured to control operations of the expansion tank 200 via the deaerating valve 30 which may be operated, such as operatively switched on and off, by the ECU 300.

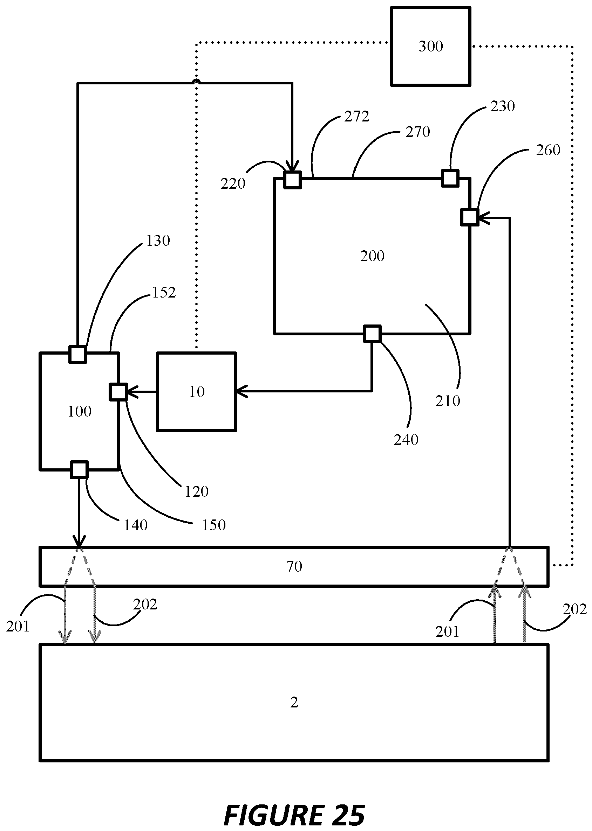

In some aspects, as shown in **FIG. 25****,** the distribution and equalizer valve 70 may be coupled with the upper coolant intake port 260 and configured to be selectively coupled with the cold coolant line 201 and the hot coolant line 202 and operatively couple the cold coolant line 201 with the hot coolant line 202. The upper coolant intake port 260 may be further configured to be coupled with and receive the coolant from the cold coolant line 201 and the hot coolant line 202 via the distribution and equalizer valve 70. In some aspects, the lower coolant outlet 140 may be further configured to be coupled with and drain or return the coolant into the cold coolant line 201 and the hot coolant line 202 via the distribution and equalizer valve 70. The ECU 300 may be electrically coupled with the distribution and equalizer valve 70 and configured to control operations of the centrifugal gas-coolant separator 100 and the expansion tank 200 via the distribution and equalizer valve 70 which may be operated, such as operatively switched on and off, by the ECU 300.

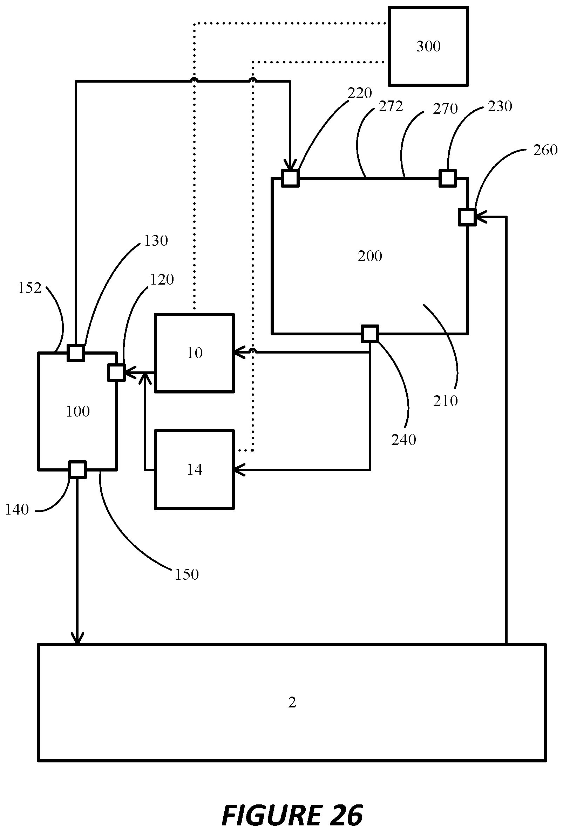

In some aspects, as can be seen in **FIG. 26****,** the coolant deaeration system 1 may further include an input valve 14. The input valve 14 may be configured to be coupled with and receive the coolant through the lower coolant drain port 240. The upper coolant inlet 120 may be coupled with the input valve 14 and configured to receive the coolant via the input valve 14. The input valve 14 may be in parallel connection with the inlet fluid accelerator 10. The ECU 300 may be electrically coupled with the input valve 14 and configured to control operations of the centrifugal gas-coolant separator 100 via the input valve 14 which may be operated, such as operatively switched open and closed, by the ECU 300. For example, when the inlet fluid accelerator 10 is turned off, the input valve 14 may be switched on, such that a sufficient amount of coolant still may flow into the separator chamber 110 through the upper coolant inlet 120. A separate pump (not shown) may be provided to circulate coolant through the input valve when the inlet fluid accelerator 10 is switched off.

Similarly, the upper coolant intake port 260 may be cooperated with both the deaerating valve 30 and the distribution and equalizer valve 70. For instance, the distribution and equalizer valve 70 may be in connection between the upper coolant intake port 260 and the deaerating valve 30. Moreover, the lower drain valve 40, or the flow control valve 50, or the outlet pump 60, or the combination of the outlet pump 60 and the bypass valve 62, may couple the lower coolant outlet 140, whether directly, or indirectly with the distribution and equalizer valve 70.

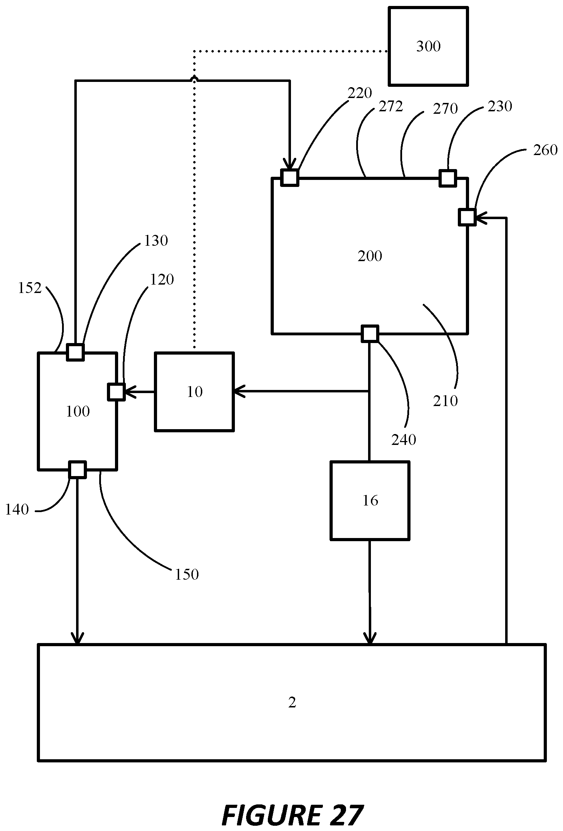

As shown in **FIG. 27****,** in some aspects, a coolant deaeration system 1 for deaerating a coolant of a vehicle may be provided. Structures and components of the coolant deaeration system 1 in some aspects may be similar to structures and components of the coolant deaeration system 1 in the previously recited aspects. In some aspects, the coolant deaeration system 1 may further include an output valve 16. The output valve 16 may be coupled with and configured to receive the coolant through the lower coolant drain port 240 and further configured to be coupled with the cooling/heating system 2. The lower coolant drain port 240 may be configured to drain or return the coolant into the cooling/heating system 2 via the output valve 16.

The ECU 300 may be electrically coupled with the output valve 16 and configured to control operations of the expansion tank 200 via the output valve 16 which may be operated, such as operatively switched on and off, by the ECU 300. For example, the ECU 300 may switch off the output valve 16 to prevent the coolant from passing through the output valve 16 when the ECU 300 may turn on the inlet fluid accelerator 10, such as the inlet pump, during the operation period of the vehicle. Accordingly, the inlet fluid accelerator 10, such as the inlet pump, may not pull coolant out of the cooling/heating system 2 through the output valve 16 due to pump suction.

Similarly, moreover, the distribution and equalizer valve 70 may be coupled with the upper coolant intake port 260, the output valve 16, and the lower coolant outlet 140. Similarly, moreover, the deaerating valve 30 may be coupled with the upper coolant intake port 260. Similarly, moreover, the lower drain valve 40, or the flow control valve 50, or the outlet pump 60, or the combination of the outlet pump 60 and the bypass valve 62, may be coupled with each of the upper coolant intake port 260, the output valve 16, and the lower coolant outlet 140.

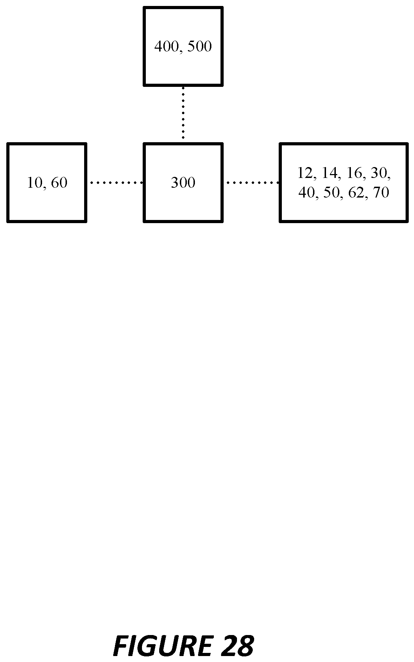

As shown in **FIG. 28****,** in the coolant deaeration system 1, with reference to **FIGs. 1-27** in the previous aspects, the ECU 300 may be electrically coupled with the pump 10, 60 and the valve 12, 14, 16, 30, 40, 50, 62, 70 and configured to control operations of the centrifugal gas-coolant separator 100 and the expansion tank 200 via the pump 10, 60 and the valve 12, 14, 16, 30, 40, 50, 62, 70. Additionally, as can be seen in **FIG. 28****,** with reference to **FIGs. 1-27** in the previous aspects, the coolant deaeration system 1 may further include at least one gas sensor 400, the ECU 300 may be electrically coupled with the at least one gas sensor 400, and the at least one gas sensor 400 may be coupled with the centrifugal gas-coolant separator 100 and/or the expansion tank 200 and/or the cooling/heating system 2 and/or the pump 10, 60 and/or the valve 12, 14, 16, 30, 40, 50, 62, 70 and configured to detect the gas in the coolant and provide a gas sensor feedback, signal, or data. The gas sensor feedback, signal, or data may be further saved in the ECU 300 or a data storage system, and/or transmitted to the ECU 300 or a data diagnose system. Additionally, as can be observed in **FIG. 28****,** with reference to **FIGs. 1-27** in the previous aspects, the coolant deaeration system 1 may further include at least one temperature sensor 500, the ECU 300 may be electrically coupled with the at least one temperature sensor 500, and the at least one temperature sensor 500 may be coupled with the centrifugal gas-coolant separator 100 and/or the expansion tank 200 and/or the cooling/heating system 2 and/or the pump 10, 60 and/or the valve 12, 14, 16, 30, 40, 50, 62, 70 and configured to detect the gas in the coolant and provide a temperature sensor feedback, signal, or data. The temperature sensor feedback, signal, or data may be further saved in the ECU 300 or the data storage system, and/or transmitted to the ECU 300 or the data diagnose system.

Since the centrifugal gas-coolant separator 100 may remove the gas from the coolant much more quickly, the pump 10 may only need to be turned on intermittently for a short period of time, such that energy consumption for pumping may be reduced. For example, the pump 10 may be turned on for a predetermined time period, once the vehicle may start to be operated, based on a range of mileage, based on that when there may be a low cooling demand and more coolant may be diverted to the coolant deaeration system 1, and/or based on a dissolved gas sensor feedback and a temperature sensor feedback and on an amount of dissolved gas higher or larger than a threshold.

Additionally, the expansion tank 200 may be or may not be positioned or located higher (at a higher elevation) than the centrifugal gas-coolant separator 100 and/or the cooling/heating system 2 (at a lower elevation). When the expansion tank 200 may be positioned or located higher than the centrifugal gas-coolant separator 100 and/or the cooling/heating system 2, the coolant may flow from the expansion tank 200 at a fill line towards the centrifugal gas-coolant separator 100 and/or the cooling/heating system 2 at a bottom line, so as to make sure that an entire coolant circuit gets filled during coolant filling.

Moreover, the top gas outlet 130 and/or the upper gas inlet 220 and/or the upper gas exhaust port 230 may be located at a highest position(s) in the coolant deaeration system 1 and compared with the cooling/heating system 2, for instance, higher than a max coolant level, so as to prevent the coolant from flowing through the top gas outlet 130 and/or the upper gas inlet 220 and/or the upper gas exhaust port 230, as if the coolant may flow through and block the top gas outlet 130 and/or the upper gas inlet 220 and/or the upper gas exhaust port 230, the gas may not be able to enter/exit through the top gas outlet 130 and/or the upper gas inlet 220 and/or the upper gas exhaust port 230 that may be blocked.

Furthermore, when at least one component of the coolant deaeration system 1 may be turned off or switched off, the energy consumption for the coolant deaeration system 1 may be decreased. On the other hand, when at least one component of the coolant deaeration system 1 may be turned on or switched on, the deaeration efficiency and/or the deaeration amount for the coolant deaeration system 1 may be increased. In other words, when at least one component of the coolant deaeration system 1 may be turned off or switched off while at least another component of the coolant deaeration system 1 may be turned on or switched on, the deaeration efficiency and/or the deaeration amount for the coolant deaeration system 1 may be decreased, increased, or unchanged.

Some examples of the disclosed technology may be also recited below:
Example 1: A coolant deaeration system 1 for deaerating a coolant of a vehicle, the coolant deaeration system 1 comprising: an inlet fluid accelerator 10 configured to receive the coolant and increase a flow velocity of the coolant. A centrifugal gas-coolant separator 100 comprising an upper coolant inlet 120 coupled with the inlet fluid accelerator 10 and configured to receive the coolant via the inlet fluid accelerator 10, a separator chamber 110 in fluid communication with the upper coolant inlet 120 and configured to deaerate gas from the coolant in a swirling motion produced by the increased flow velocity of the coolant entering the separator chamber 110 through the upper coolant inlet 120, and a top gas outlet 130 in gaseous communication with the separator chamber 110 and configured to exhaust the gas deaerated from the coolant in the swirling motion out of the separator chamber 110, and an expansion tank 200 comprising an upper gas inlet 220 coupled with the top gas outlet 130 and configured to receive the gas through the top gas outlet 130, and a tank chamber 210 in gaseous communication with the upper gas inlet 220 and configured to accommodate the gas entering the tank chamber 210 through the upper gas inlet 220.
Example 2: The coolant deaeration system 1 of Example 1, wherein the inlet fluid accelerator 10 is further configured to be coupled with a cooling/heating system 2 of the vehicle and receive the coolant from the cooling/heating system 2.
Example 3: The coolant deaeration system 1 of Example 1 further comprising: a deaerating valve 30 coupled with the inlet fluid accelerator 10 and configured to be coupled with a cooling/heating system 2 of the vehicle and actively bleed the gas out when receiving the coolant from the cooling/heating system 2, wherein the inlet fluid accelerator 10 is further configured to receive the coolant via the deaerating valve 30.
Example 4: The coolant deaeration system 1 of Example 1 further comprising: an intake valve 12 configured to be coupled with a cooling/heating system 2 of the vehicle and receive the coolant from the cooling/heating system 2, wherein the expansion tank 200 further comprises an upper coolant intake port 260 coupled with the intake valve 12 and configured to receive the coolant via the intake valve 12, and wherein the tank chamber 210 is in fluid communication with the upper coolant intake port 260 and further configured to accommodate the coolant entering the tank chamber 210 through the upper coolant intake port 260.
Example 5: The coolant deaeration system 1 of Example 4 further comprising: a deaerating valve 30 coupled with the intake valve 12 and configured to be coupled with the cooling/heating system 2 and actively bleed the gas out when receiving the coolant from the cooling/heating system 2, wherein the intake valve 12 is further configured to be coupled with the cooling/heating system 2 via the deaerating valve 30 and receive the coolant via the deaerating valve 30.
Example 6: The coolant deaeration system 1 of Example 4 further comprising: a distribution and equalizer valve 70 coupled with the intake valve 12 and configured to be selectively coupled with a cold coolant line 201 and a hot coolant line 202 of the cooling/heating system 2 of the vehicle and operatively couple the cold coolant line 201 with the hot coolant line 202, wherein the intake valve 12 is further configured to be coupled with and receive the coolant from the cold coolant line 201 and the hot coolant line 202 via the distribution and equalizer valve 70.
Example 7: The coolant deaeration system 1 of Example 1, wherein the tank chamber 210 is further configured to accommodate the coolant, and wherein the expansion tank 200 further comprises a lower coolant drain port 240 in fluid communication with the tank chamber 210 and configured to drain the coolant out of the tank chamber 210.
Example 8: The coolant deaeration system 1 of Example 7, wherein the lower coolant drain port 240 is further configured to be coupled with a cooling/heating system 2 of the vehicle and drain the coolant into the cooling/heating system 2.
Example 9: The coolant deaeration system 1 of Example 8 further comprising: a lower drain valve 40 coupled with the lower coolant drain port 240 and configured to be coupled with the cooling/heating system 2 and drain the coolant into the cooling/heating system 2, wherein the lower coolant drain port 240 is further configured to be coupled with and drain the coolant into the cooling/heating system 2 via the lower drain valve 40.
Example 10: The coolant deaeration system 1 of Example 8 further comprising: a flow control valve 50 coupled with the lower coolant drain port 240 and configured to be coupled with the cooling/heating system 2 and drain the coolant into the cooling/heating system 2, wherein the lower coolant drain port 240 is further configured to be coupled with and drain the coolant into the cooling/heating system 2 via the flow control valve 50.
Example 11: The coolant deaeration system 1 of Example 8 further comprising: an outlet pump 60 coupled with the lower coolant drain port 240 and configured to be coupled with the cooling/heating system 2 and drain the coolant into the cooling/heating system 2, wherein the lower coolant drain port 240 is further configured to be coupled with and drain the coolant into the cooling/heating system 2 via the outlet pump 60.
Example 12: The coolant deaeration system 1 of Example 11 further comprising: a bypass valve 62 coupled with the lower coolant drain port 240 and configured to be coupled with the cooling/heating system 2 and drain the coolant into the cooling/heating system 2, wherein the lower coolant drain port 240 is further configured to be coupled with and drain the coolant into the cooling/heating system 2 via the bypass valve 62.
Example 13: The coolant deaeration system 1 of Example 8 further comprising: a distribution and equalizer valve 70 coupled with the lower coolant drain port 240 and configured to be selectively coupled with a cold coolant line 201 and a hot coolant line 202 of the cooling/heating system 2 and operatively couple the cold coolant line 201 with the hot coolant line 202, wherein the lower coolant drain port 240 is further configured to be coupled with and drain the coolant into the cold coolant line 201 and the hot coolant line 202 via the distribution and equalizer valve 70.
Example 14: The coolant deaeration system 1 of Example 1 further comprising: a distribution and equalizer valve 70 coupled with the inlet fluid accelerator 10 and configured to be selectively coupled with a cold coolant line 201 and a hot coolant line 202 of a cooling/heating system 2 of the vehicle and operatively couple the cold coolant line 201 with the hot coolant line 202, wherein the inlet fluid accelerator 10 is further configured to receive the coolant from the cold coolant line 201 and the hot coolant line 202 via the distribution and equalizer valve 70.
Example 15: The coolant deaeration system 1 of Example 1, wherein the centrifugal gas-coolant separator 100 further comprises a lower coolant outlet 140 in fluid communication with the separator chamber 110 and configured to drain the coolant out of the separator chamber 110.
Example 16: The coolant deaeration system 1 of Example 15, wherein the expansion tank 200 further comprises an upper coolant entrance 250 coupled with the lower coolant outlet 140 and configured to receive the coolant through the lower coolant outlet 140, and wherein the tank chamber 210 is in fluid communication with the upper coolant entrance 250 and further configured to accommodate the coolant entering the tank chamber 210 through the upper coolant entrance 250.
Example 17: The coolant deaeration system 1 of Example 15, wherein the lower coolant outlet 140 is further configured to couple with a cooling/heating system 2 of the vehicle and drain the coolant into the cooling/heating system 2.
Example 18: The coolant deaeration system of Example 17 further comprising: a lower drain valve coupled with the lower coolant outlet and configured to be coupled with the cooling/heating system and drain the coolant into the cooling/heating system, wherein the lower coolant outlet is further configured to be coupled with and drain the coolant into the cooling/heating system via the lower drain valve.
Example 19: The coolant deaeration system of Example 18 further comprising: a flow control valve coupled with the lower coolant outlet and configured to be coupled with the cooling/heating system and drain the coolant into the cooling/heating system, wherein the lower coolant outlet is further configured to be coupled with and drain the coolant into the cooling/heating system via the flow control valve.
Example 20: The coolant deaeration system of Example 18 further comprising: an outlet pump coupled with the lower coolant outlet and configured to be coupled with the cooling/heating system and drain the coolant into the cooling/heating system, wherein the lower coolant outlet is further configured to be coupled with and drain the coolant into the cooling/heating system via the outlet pump.
Example 21: The coolant deaeration system of Example 20 further comprising: a bypass valve coupled with the lower coolant outlet and configured to be coupled with the cooling/heating system and drain the coolant into the cooling/heating system, wherein the lower coolant outlet is further configured to be coupled with and drain the coolant into the cooling/heating system via the bypass valve.
Example 22: The coolant deaeration system 1 of Example 18 further comprising: a distribution and equalizer valve 70 coupled with the lower coolant outlet 140 and configured to be selectively coupled with a cold coolant line 201 and a hot coolant line 202 of the cooling/heating system 2 and operatively couple the cold coolant line 201 with the hot coolant line 202, wherein the lower coolant outlet 140 is further configured to be coupled with and drain the coolant into the cold coolant line 201 and the hot coolant line 202 via the distribution and equalizer valve 70.
Example 23: The coolant deaeration system 1 of Example 1, wherein the expansion tank 200 further comprises an upper coolant intake port 260 configured to be coupled with a cooling/heating system 2 of the vehicle and receive the coolant from the cooling/heating system 2, and wherein the tank chamber 210 is in fluid communication with the upper coolant intake port 260 and further configured to accommodate the coolant entering the tank chamber 210 through the upper coolant intake port 260.
Example 24: The coolant deaeration system 1 of Example 23 further comprising: a distribution and equalizer valve 70 coupled with the upper coolant intake port 260 and configured to be selectively coupled with a cold coolant line 201 and a hot coolant line 202 of a cooling/heating system 2 of the vehicle and operatively couple the cold coolant line 201 with the hot coolant line 202, wherein the upper coolant intake port 260 is further configured to be coupled with and receive the coolant from the cold coolant line 201 and the hot coolant line 202 via the distribution and equalizer valve 70.
Example 25: The coolant deaeration system 1 of Example 23 further comprising: a deaerating valve 30 coupled with the upper coolant intake port 260 and configured to be coupled with the cooling/heating system 2 and actively bleed the gas out when receiving the coolant from the cooling/heating system 2, wherein the upper coolant intake port 260 is further configured to be coupled with and receive the coolant via the deaerating valve 30.
Example 26: The coolant deaeration system 1 of Example 23, wherein the expansion tank 200 further comprises a lower coolant drain port 240 in fluid communication with the tank chamber 210 and configured to drain the coolant out of the tank chamber 210, and wherein the inlet fluid accelerator 10 is coupled with the lower coolant drain port 240 and further configured to receive the coolant through the lower coolant drain port 240.
Example 27: The coolant deaeration system 1 of Example 26 further comprising: an input valve 14 coupled with and configured to receive the coolant through the lower coolant drain port 240, wherein the upper coolant inlet 120 is coupled with the input valve 14 and configured to receive the coolant via the input valve 14.
Example 28: The coolant deaeration system 1 of Example 26 further comprising: an output valve 16 coupled with and configured to receive the coolant through the lower coolant drain port 240 and further configured to be coupled with the cooling/heating system 2, wherein the lower coolant drain port 240 is configured to drain the coolant into the cooling/heating system 2 via the output valve 16.
Example 29: The coolant deaeration system 1 of Example 1 further comprising: a nozzle 120 coupled with the upper coolant inlet 120 and configured to further increase the flow velocity of the coolant and inject the coolant with the further increased flow velocity into the separator chamber 110.
Example 30: The coolant deaeration system 1 of Example 1, wherein the centrifugal gas-coolant separator 100 further comprises a separator casing 150 delineating the separator chamber 110, wherein the separator casing 150 comprises a top separator surface 152, and wherein the top gas outlet 130 is formed on the top separator surface 152.
Example 31: The coolant deaeration system 1 of Example 1, wherein the expansion tank 200 further comprises a tank casing 270 delineating the tank chamber 210, wherein the tank casing 270 comprises a top tank surface 272, and wherein the upper gas inlet 220 is formed on the top tank surface 272.
Example 32: The coolant deaeration system 1 of Example 1, wherein the expansion tank 200 further comprises an upper gas exhaust port 230 in gaseous communication with the tank chamber 210 and configured to exhaust the gas out of the tank chamber 210.
Example 33: The coolant deaeration system 1 of Example 32, wherein the expansion tank 200 further comprises a tank casing 270 delineating the tank chamber 210, wherein the tank casing 270 comprises a top tank surface 272, and wherein the upper gas exhaust port 230 is formed on the top tank surface 272.
Example 34: The coolant deaeration system 1 of Example 1, wherein the centrifugal gas-coolant separator 100 is integrated with the expansion tank 200.
Example 35: The coolant deaeration system 1 of Example 1, wherein the centrifugal gas-coolant separator 100 is separated from the expansion tank 200.
Example 36: The coolant deaeration system 1 of Example 1, wherein the centrifugal gas-coolant separator 100 has a funnel shape.
Example 37: The coolant deaeration system 1 of Example 1 further comprising: at least one pump coupled with the centrifugal gas-coolant separator 100 and/or the expansion tank 200, at least one valve coupled with the centrifugal gas-coolant separator 100 and/or the expansion tank 200, an electric control unit (ECU) 300 electrically coupled with the at least one pump and the at least one valve and configured to control operations of the centrifugal gas-coolant separator 100 and the expansion tank 200 via the at least one pump and the at least one valve.
Example 38: The coolant deaeration system 1 of Example 1 further comprising: at least one gas sensor 400 coupled with the centrifugal gas-coolant separator 100 and/or the expansion tank 200 and configured to detect the gas in the coolant.
Example 39: The coolant deaeration system 1 of Example 1 further comprising: at least one temperature sensor 500 coupled with the centrifugal gas-coolant separator 100 and/or the expansion tank 200 and configured to detect a temperature of the coolant.

Some components along with respective numerical references recited in the disclosure may be listed below:
coolant deaeration system 1
centrifugal gas-coolant separator 100
separator chamber 110
upper coolant inlet 120
top gas outlet 130
lower coolant outlet 140
separator casing 150
top separator surface 152
expansion tank 200
tank chamber 210
upper gas inlet 220
upper gas exhaust port 230
lower coolant drain port 240
upper coolant entrance 250
upper coolant intake port 260
tank casing 270
top tank surface 272
electric control unit (ECU) 300
cooling/heating system 2
cold coolant line 201
cold coolant sub-lines 2011
hot coolant line 202
hot coolant sub-lines 2021
gas sensor 400
temperature sensor 500
inlet fluid accelerator 10
input valve 14
output valve 16
nozzle 120
deaerating valve 30
lower drain valve 40
flow control valve 50
outlet pump 60
bypass valve 62
intake valve 12
distribution and equalizer valve 70
distribution valve 72
distribution passage 722
equalizer valve 74
equalizer passage 742

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A coolant deaeration system for deaerating a coolant of a vehicle, the coolant deaeration system comprising:
an inlet fluid accelerator configured to receive the coolant and increase a flow velocity of the coolant;
a centrifugal gas-coolant separator comprising an upper coolant inlet coupled with the inlet fluid accelerator and configured to receive the coolant via the inlet fluid accelerator, a separator chamber in fluid communication with the upper coolant inlet and configured to deaerate gas from the coolant in a swirling motion produced by the increased flow velocity of the coolant entering the separator chamber through the upper coolant inlet, and a top gas outlet in gaseous communication with the separator chamber and configured to exhaust the gas deaerated from the coolant in the swirling motion out of the separator chamber; and
an expansion tank comprising an upper gas inlet coupled with the top gas outlet and configured to receive the gas through the top gas outlet, and a tank chamber in gaseous communication with the upper gas inlet and configured to accommodate the gas entering the tank chamber through the upper gas inlet.

2. The coolant deaeration system of Claim 1,
wherein the inlet fluid accelerator is further configured to be coupled with a cooling/heating system of the vehicle and receive the coolant from the cooling/heating system.

3. The coolant deaeration system of Claim 1 further comprising:
a deaerating valve coupled with the inlet fluid accelerator and configured to be coupled with a cooling/heating system of the vehicle and actively bleed the gas out when receiving the coolant from the cooling/heating system,
wherein the inlet fluid accelerator is further configured to receive the coolant via the deaerating valve.

4. The coolant deaeration system of Claim 1 further comprising:
an intake valve configured to be coupled with a cooling/heating system of the vehicle and receive the coolant from the cooling/heating system,
wherein the expansion tank further comprises an upper coolant intake port coupled with the intake valve and configured to receive the coolant via the intake valve, and
wherein the tank chamber is in fluid communication with the upper coolant intake port and further configured to accommodate the coolant entering the tank chamber through the upper coolant intake port.

5. The coolant deaeration system of Claim 4 further comprising:
a deaerating valve coupled with the intake valve and configured to be coupled with the cooling/heating system and actively bleed the gas out when receiving the coolant from the cooling/heating system,
wherein the intake valve is further configured to be coupled with the cooling/heating system via the deaerating valve and receive the coolant via the deaerating valve.

6. The coolant deaeration system of Claim 4 further comprising:
a distribution and equalizer valve coupled with the intake valve and configured to be selectively coupled with a cold coolant line and a hot coolant line of the cooling/heating system of the vehicle and operatively couple the cold coolant line with the hot coolant line,
wherein the intake valve is further configured to be coupled with and receive the coolant from the cold coolant line and the hot coolant line via the distribution and equalizer valve.

7. The coolant deaeration system of Claim 1,
wherein the tank chamber is further configured to accommodate the coolant, and
wherein the expansion tank further comprises a lower coolant drain port in fluid communication with the tank chamber and configured to drain the coolant out of the tank chamber.

8. The coolant deaeration system of Claim 7,
wherein the lower coolant drain port is further configured to be coupled with a cooling/heating system of the vehicle and drain the coolant into the cooling/heating system.

9. The coolant deaeration system of Claim 8 further comprising:
a lower drain valve coupled with the lower coolant drain port and configured to be coupled with the cooling/heating system and drain the coolant into the cooling/heating system,
wherein the lower coolant drain port is further configured to be coupled with and drain the coolant into the cooling/heating system via the lower drain valve.

10. The coolant deaeration system of Claim 8 further comprising:
a flow control valve coupled with the lower coolant drain port and configured to be coupled with the cooling/heating system and drain the coolant into the cooling/heating system,
wherein the lower coolant drain port is further configured to be coupled with and drain the coolant into the cooling/heating system via the flow control valve.

11. The coolant deaeration system of Claim 8 further comprising:
an outlet pump coupled with the lower coolant drain port and configured to be coupled with the cooling/heating system and drain the coolant into the cooling/heating system,
wherein the lower coolant drain port is further configured to be coupled with and drain the coolant into the cooling/heating system via the outlet pump.

12. The coolant deaeration system of Claim 11 further comprising:
a bypass valve coupled with the lower coolant drain port and configured to be coupled with the cooling/heating system and drain the coolant into the cooling/heating system,
wherein the lower coolant drain port is further configured to be coupled with and drain the coolant into the cooling/heating system via the bypass valve.

13. The coolant deaeration system of Claim 8 further comprising:
a distribution and equalizer valve coupled with the lower coolant drain port and configured to be selectively coupled with a cold coolant line and a hot coolant line of the cooling/heating system and operatively couple the cold coolant line with the hot coolant line,
wherein the lower coolant drain port is further configured to be coupled with and drain the coolant into the cold coolant line and the hot coolant line via the distribution and equalizer valve.

14. The coolant deaeration system of Claim 1 further comprising:
a distribution and equalizer valve coupled with the inlet fluid accelerator and configured to be selectively coupled with a cold coolant line and a hot coolant line of a cooling/heating system of the vehicle and operatively couple the cold coolant line with the hot coolant line,
wherein the inlet fluid accelerator is further configured to receive the coolant from the cold coolant line and the hot coolant line via the distribution and equalizer valve.

15. The coolant deaeration system of Claim 1,
wherein the centrifugal gas-coolant separator further comprises a lower coolant outlet in fluid communication with the separator chamber and configured to drain the coolant out of the separator chamber.
